(19) Europäisches Patentamt
European Patent Office
Office européen des brevets

(11) EP 3 118 261 A1

(12) EUROPEAN PATENT APPLICATION
published in accordance with Art. 153(4) EPC

(43) Date of publication:
**18.01.2017 Bulletin 2017/03**

(21) Application number: **14885124.9**

(22) Date of filing: **16.12.2014**

(51) Int Cl.:
***C08L 101/00*** *(2006.01)* ***C08K 3/28*** *(2006.01)*

(86) International application number:
**PCT/JP2014/083293**

(87) International publication number:
**WO 2015/136806 (17.09.2015 Gazette 2015/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.03.2014 JP 2014046119**

(71) Applicants:
- **Nitto Denko Corporation**
  **Ibaraki-shi, Osaka 567-8680 (JP)**
- **Nitto Shinko Corporation**
  **Sakai-shi, Fukui, 910-0381 (JP)**

(72) Inventors:
- **HATAKEYAMA Yoshiharu**
  **Ibaraki-shi**
  **Osaka 567-8680 (JP)**
- **FUJIKAWA Kenichi**
  **Ibaraki-shi**
  **Osaka 567-8680 (JP)**
- **YAMAGUCHI Miho**
  **Ibaraki-shi**
  **Osaka 567-8680 (JP)**
- **OOHASHI Akihiro**
  **Sakai-shi**
  **Fukui 910-0381 (JP)**
- **YAMAGISHI Yuji**
  **Sakai-shi**
  **Fukui 910-0381 (JP)**

(74) Representative: **Grünecker Patent- und Rechtsanwälte**
**PartG mbB**
**Leopoldstraße 4**
**80802 München (DE)**

# (54) THERMALLY CONDUCTIVE POLYMER COMPOSITION AND THERMALLY CONDUCTIVE MOLDING

(57) The present invention provides a thermal conductive polymer composition including aluminum nitride particles having a specific particle size distribution, and a polymer, as a polymer composition with low probability for mixing of an air bubble in a thermal conductive molded article, despite a high volume filling of aluminum nitride particle.



Printed by Jouve, 75001 PARIS (FR)

**Description**

TECHNICAL FIELD

The present invention relates to a thermal conductive polymer composition including an aluminum nitride particle and a polymer, and a thermal conductive molded article obtained by molding the thermal conductive polymer composition.

BACKGROUND ART

In recent years, with respect to an electronic device, etc., demands for space saving of the installation place and weight reduction are increasing.

In addition, along with an increase in the localization of control mechanism or the cloud utilization, the demand for smaller size and higher performance of an electronic device is growing.

Consequently, the quantity of heat generated from the device is increased, expanding the opportunities to require excellent thermal conductivity.

For example, in the technical field of a semiconductor device used for, e.g., a high-brightness LED, a personal computer, an automotive motor control mechanism, or a device utilizing power electronic technology of converting and controlling electric power, it is strongly demanded to exhibit excellent thermal conductivity.

A molded article excellent in thermal conductivity utilized for heat dissipation in the above-described field is often used around an electronic component and therefore, is required to have high insulating property, in addition to high thermal conductivity.

A thermal conductive molded article used for this type of application is in many cases formed of a polymer composition in which an inorganic filler is incorporated to impart excellent thermal conductivity.

Among such thermal conductive polymer compositions, an epoxy resin composition prepared by dispersing an inorganic filler in an epoxy resin enables its molded article to exert excellent properties in terms of not only thermal conductivity but also adhesiveness, electrical insulating property, strength, etc. and therefore, is extensively used.

Specifically, the epoxy resin composition is widely used for, e.g., an encapsulating material of a semiconductor device or a prepreg sheet for bonding a semiconductor device to a heat dissipater.

As the content ratio of the inorganic filler is higher and as the thermal conductivity of the inorganic filler contained is higher, the polymer composition usually exhibits excellent thermal conductivity.

Under such a background, attempts are being made to incorporate a boron nitride particle or an aluminum nitride particle, which exhibits particularly high thermal conductivity among inorganic fillers, into the polymer composition in a high ratio. For example, in Patent Document 1, it is attempted to achieve a high volume filling of aluminum nitride particle by adjusting the particle size distribution or controlling the interface.

BACKGROUND ART DOCUMENT

PATENT DOCUMENT

Patent Document 1: JP-A-6-24715

SUMMARY OF THE INVENTION

PROBLEMS THAT THE INVENTION IS TO SOLVE

A polymer composition filled with a high volume of aluminum nitride particle makes it possible for a thermal conductive molded article formed of the polymer composition to exhibit excellent thermal conductivity.

On the other hand, when a polymer composition is filled with a high volume of aluminum nitride particle, for example, in the case of presenting a heated and molten state so as to manufacture a molded article, the polymer composition cannot exhibit sufficient fluidity, and an air bubble is likely to remain in the molded article.

Even in the case where the polymer composition is formed into varnish with an organic solvent, when filled with a high volume of aluminum nitride particle at a low filling density, an air bubble is readily formed in the inside after removing the organic solvent.

Accordingly, in all cases, an air bubble is likely to be mixed in the thermal conductive molded article.

The presence of an air bubble causes reduction in the thermal conductivity and raises a probability of producing a problem in the strength or electrical insulating property of the thermal conductive molded article.

The present invention has been made in consideration of these problems, and an object of the present invention is to provide a polymer composition with low probability for mixing of an air bubble in a thermal conductive molded article,

despite a high volume filling of aluminum nitride particle, and in turn, provide a thermal conductive molded article exhibiting excellent properties in terms of thermal conductivity, etc.

## MEANS FOR SOLVING THE PROBLEMS

In order to achieve such an object, a thermal conductive polymer composition of the present invention is a thermal conductive polymer composition including an aluminum nitride particle and a polymer, in which the aluminum nitride particle contains, as an essential component, a first particle having a maximum peak value of a particle size distribution curve in a range of 20 μm to 200 μm and contains, as an optional component, a second particle having a maximum peak value of the particle size distribution curve in a range of 0.1 μm to 10 μm, the first particle is contained in an amount of from 40 to 100 mass%, and the second particle is contained in an amount of 60 mass% or less, and in the first particle, when a particle diameter at the maximum peak value is denoted as $D_m$ (μm) and a half-width of the particle size distribution curve at the maximum peak value is denoted as $\Delta D_{0.5}$ (μm), a ratio $D_{is}$ ($\Delta D_{0.5}/D_m$) of the half-width to the particle diameter at the maximum peak value is 1.7 or less.

## ADVANTAGE OF THE INVENTION

In the present invention, the aluminum nitride particle contained in the thermal conductive polymer composition has a predetermined particle size distribution, and therefore, the filling property of the aluminum nitride particle is improved.
Consequently, when the polymer composition is put into, for example, a heated and molten state at the time of formation of a thermal conductive molded article, the polymer composition can exhibit excellent fluidity.
That is, according to the present invention, a polymer composition with low probability for mixing of an air bubble in a thermal conductive molded article, despite a high volume filling of aluminum nitride particle, can be provided.

## BRIEF DESCRIPTION OF THE DRAWINGS

[Fig. 1] Fig. 1 is a view schematically showing the particle size distribution curve of one aluminum nitride particle.
[Fig. 2] Fig. 2 is a view schematically showing the particle size distribution curve of another aluminum nitride particle.
[Figs. 3] Figs. 3 are views schematically showing press sets for producing a sheet-like molded article.

## MODE FOR CARRYING OUT THE INVENTION

The embodiment of the present invention is described below.
The polymer composition of this embodiment contains an aluminum nitride particle and a polymer.
As the aluminum nitride particle, an aluminum nitride particle obtained by a conventionally known method can be incorporated into the polymer composition of this embodiment.
More specifically, Examples of the aluminum nitride particle include those obtained by a method such as a direct nitridation method of nitriding a metallic aluminum particle in a high-temperature nitrogen atmosphere, a reduction nitridation method of reducing/nitriding a mixture powder of aluminum oxide particle and carbon powder in a high-temperature nitrogen atmosphere, and a gas-phase reaction method of subjecting an organic aluminum gas and a nitrogen-containing gas (e.g., ammonia gas) to a gas-phase reaction.
In addition, a particle obtained by crushing a lump of aluminum nitride may also be used as the aluminum nitride particle.
The aluminum nitride particle may be a polycrystalline particle or a monocrystalline particle.
The aluminum nitride particle may also be a sintered article.
Accordingly, the aluminum nitride particle may contain impurities derived from a sintering aid, etc., in addition to aluminum nitride.
The impurity elements include Y element, B element, Fe element, Si element, Ca element, Mg element, Ti element, Cr element, Cu element, Ni element, Na element, Cl element, and C element.
The impurity elements also include Al element, O element and H element constituting $Al_2O_3$, $Al(OH)_3$, etc., other than constituting aluminum nitride.
In the aluminum nitride particle according to this embodiment, the content of each element contained as an impurity as described above is preferably 0.1 mass% or less.
The aluminum nitride particle may also be an aluminum nitride particle containing a hydrate or oxide of aluminum nitride on the surface thereof.
Furthermore, the aluminum nitride particle may be an untreated particle or a surface-treated particle, and in

particular, since aluminum nitride has low water resistance and sometimes causes a hydrolysis upon contact with water, the aluminum nitride particle is preferably subjected to a surface treatment so as to enhance the water resistance.

More specifically, in the aluminum nitride particle, for example, a coating film of an organic material or an inorganic material except for aluminum nitride is preferably formed thereon.

An aluminum nitride particle in which the coating film is attached to the surface thereof by chemical bonding is preferred, rather than a particle in which the coating film is physically attached to the surface thereof.

With respect to the morphology of the aluminum nitride particle, spherical (including completely spherical), polyhedral particulate, needle-like, amorphous, plate-like, etc may be mentioned, but is not limited thereto.

From the viewpoint of making it easy to increase the filling factor of aluminum nitride in the thermal conductive molded article which will be described later, the morphology of the aluminum nitride particle is preferably spherical or polyhedral particulate.

From the viewpoint of causing the thermal conductive molded article which will be described later, to exhibit excellent thermal conductivity, the morphology of the aluminum nitride particle is preferably plate-like.

The morphology of the aluminum nitride particle can be confirmed by an image analytical method and, for example, can be confirmed using a particle image analyzer, Morphologi G3 (manufactured by Malvern).

In order to suppress the mixing of an air bubble in a thermal conductive molded article, it is important for the polymer composition of this embodiment to contain an aluminum nitride particle such that a predetermined particle size distribution is provided.

More specifically, in the polymer composition of this embodiment, it is important that the aluminum nitride particle contains, as an essential component, a first particle having a maximum peak value of a particle size distribution curve in a range of 20 μm to 200 μm, and it is important that the content of the first particle is from 40 to 100 mass%.

In the polymer composition of this embodiment, the aluminum nitride particle may contain, as an optional component, a second particle having a maximum peak value of the particle size distribution curve in a range of 0.1 μm to 10 μm and may contain the second particle such that the content thereof is 60 mass% or less.

In the present specification, the particle size distribution curve of the aluminum nitride particle means a particle size distribution curve on the volume basis.

The maximum peak value of the first particle is preferably from 20 μm to 200 μm, more preferably from 30 μm to 150 μm, still more preferably from 33 μm to 120 μm, yet still more preferably from 35 μm to 110 μm, even yet still more preferably from 40 μm to 90 μm.

The content of the first particle in the polymer composition is preferably from 60 to 100 mass%, more preferably from 60 to 80 mass%, still more preferably from 60 to 70 mass%.

Accordingly, the content of the second particle in the polymer composition is preferably 40 mass% or less, more preferably from 20 to 40 mass%, still more preferably from 30 to 40 mass%.

It is important that, in the first particle, when the particle diameter at the maximum peak value described above (hereinafter, sometimes referred to as "maximum peak particle diameter") is denoted as "$D_m$ (μm)" and the half-width of the particle size distribution curve at the maximum peak value is denoted as "$\Delta D_{0.5}$ (μm)", the ratio "$D_{is}$" of the half-width to the maximum peak particle diameter is 1.7 or less.

The ratio "$D_{is}$" is preferably 1.4 or less, more preferably 1.2 or less, still more preferably 1.0 or less.

The lower limit value of the ratio "$D_{is}$" is usually a value more than 0 and is preferably 0.3 or more, more preferably 0.5 or more, still more preferably 0.6 or more.

The ratio "$D_{is}$" is determined as a value ($\Delta D_{0.5}/D_m$) obtained by dividing the half-width "$\Delta D_{0.5}$ (μm)" by the maximum peak particle diameter "$D_m$ (μm)".

The maximum peak particle diameter $D_m$ (μm) is determined by the particle size analysis on the volume basis of the aluminum nitride particle.

With respect to the half-width "$\Delta D_{0.5}$", describing this by taking Fig. 1 as an example, a particle size distribution curve CD on the volume basis of the aluminum nitride particle is drawn by assigning the particle diameter to the abscissa and assigning the occurrence frequency of particle having such a size to the ordinate, and when the maximum value of the occurrence frequency in the range above (from 20 μm to 200 μm) is denoted as "P", the half-width is determined from the peak width of the particle size distribution curve CD at the half maximum (P/2).

More specifically, with respect to two intersections XH and XL between a straight line L passing the point showing the half maximum (P/2) and running in parallel with the abscissa and the particle size distribution curve CD, the half-width ($\Delta D_{0.5}$) is determined as a value ($D_H$-$D_L$) obtained by subtracting the particle diameter ($D_L$) at the position of intersection XL on the finer particle side relative to the maximum peak particle diameter from the particle diameter ($D_H$) at the position of intersection XH on the coarser particle side.

The maximum peak particle diameter and particle size distribution of the aluminum nitride particle can be confirmed by an image analytical method and, for example, can be measured using a particle image analyzer, Morphologi G3 (manufactured by Malvern).

As illustrated in Fig. 2, when the second particle is incorporated together with the first particle and the particle

size distribution curve consequently becomes a curve showing a maximum in an area of 0.1 μm to 10 μm in addition to the area of 20 μm to 200 μm and is one continuous curve showing one minimum between those two maximums, the ratio between the first particle and the second particle is preferably adjusted so as to maintain a predetermined relationship among the minimum value and two maximum values.

Specifically, when the frequency value (hereinafter, sometimes referred to as "first maximum value") at a highest inflection point LHa in the area of 20 μm to 200 μm (hereinafter, sometimes referred to as "range (A)") is denoted as "$P_1$" and the frequency value (hereinafter, sometimes referred to as "second maximum value") at a highest inflection point LHb in the area of 0.1 μm to 10 μm (hereinafter, sometimes referred to as "range (B)") is denoted as "$P_2$" and when the frequency value (hereinafter, sometimes simply referred to as "minimum value") at a lowest inflection point LL1 between two inflection points LHa and LHb is denoted as "$P_3$", the aluminum nitride particle is preferably incorporated into the polymer composition such that the ratio ($P_1/P_2$) (hereinafter, sometimes referred to as "maximum value ratio (RH)") of the first maximum value ($P_1$) to the second maximum value ($P_2$) becomes 1.2 or more.

If the value of the maximum value ratio (RH) is low, this means a tendency that a relatively large number of aluminum nitride particles having a fine particle diameter are contained in the polymer composition, and means a tendency that the fluidity of the polymer composition, e.g., in a heated and molten state is reduced.

Accordingly, in this embodiment, the maximum value ratio (RH) is preferably 1.5 or more, more preferably from 1.5 to 15, still more preferably from 2 to 4.

If the ratio ($P_1/P_3$) of the first maximum value ($P_1$) to the minimum value ($P_3$) or the ratio ($P_2/P_3$) of the second maximum value ($P_2$) to the minimum value ($P_3$) shows a low value, the fluidity of the polymer composition tends to be reduced.

For this reason, the first maximum/minimum value ratio (RHLa: $P_1/P_3$) that is a ratio of the first maximum value ($P_1$) to the minimum value ($P_3$) is preferably 3 or more, more preferably from 8 to 120, still more preferably from 30 to 60, and most preferably from 30 to 40.

The second maximum/minimum value ratio (RHLb) that is a ratio of the second maximum value ($P_2$) to the minimum value ($P_3$) is preferably 2 or more, more preferably from 3 to 100, still more preferably from 4 to 20, and most preferably from 10 to 15.

As for the aluminum nitride particle, a commercially available product may be incorporated into the polymer composition of this embodiment, directly or after applying an appropriate surface treatment to the commercially available product.

Examples of the commercially available product include: "AlN050AF", "A1N100AF" and "A1N200AF" produced by Globaltop Materials; "FAN-f05", "FAN-f30", "FAN-f50" and "FAN-f80" produced by Furukawa Denshi Co., Ltd.; "TOYAL NITE" produced by Toyo Aluminium K.K.; and "High-purity Aluminum Nitride Powder and Granules" produced by Tokuyama Corporation.

In the polymer composition of this embodiment, one of these aluminum nitride particles may be used alone, or two or more kinds thereof may be used in combination.

When a plurality of commercially available products described above are incorporated as the first or second particle into the polymer composition of this embodiment, a composite waveform of particle size distribution curves of individual commercially available products may appear as a total particle size distribution curve.

Accordingly, for example, in the case of incorporating a plurality of commercially available products as the first particle into the polymer composition, a plurality of maximum values, or one maximum value and one or more shoulders, may appear in the range (A) in the total particle size distribution curve.

The polymer composition of this embodiment preferably contains a plurality of kinds of aluminum nitride particles so that even in such a case, the particle size distribution curve formed by all aluminum nitride particles contained can show a maximum peak value in the range (A) and the particle diameter and half-width at this maximum peak value can satisfy the requirement above.

Examples of the polymer constituting the polymer composition together with the aluminum nitride particle include a thermoplastic resin, a thermosetting resin, and rubber.

The thermoplastic resin for constituting the polymer composition is not particularly limited, but examples thereof include fluororesin, acrylic resin, polystyrene resin, polyester resin, polyacrylonitrile resin, maleimide resin, polyvinyl acetate resin, polyethylene resin, polypropylene resin, an ethylene/vinyl acetate copolymer, polyvinyl alcohol resin, polyamide resin, polyvinyl chloride resin, polyacetal resin, polycarbonate resin, polyphenylene oxide resin, polyphenylene sulfide resin, polyether ether ketone resin (PEEK), polyallylsulfone resin, thermoplastic polyimide resin, thermoplastic urethane resin, polyetherimide resin, polymethylpentene resin, cellulose resin, and a liquid crystal polymer.

The thermosetting resin is not particularly limited, and examples thereof include epoxy resin, thermosetting polyimide resin, phenol resin, phenoxy resin, urea resin, melamine resin, diallyl phthalate resin, silicone resin, and thermosetting urethane resin.

Examples of the rubber include natural rubber, styrene/butadiene rubber, ethylene/α-olefin rubber, chloroprene rubber, silicone rubber, and fluororubber.

In the polymer composition of this embodiment, one of the above-described resins or rubbers may be used alone, or two or more kinds thereof may be used in combination.

In order for the polymer composition to exhibit excellent thermal conductivity, among the polymers described above, those having a liquid crystalline structure such as mesogen skeleton are preferred.

In addition, in order for the polymer composition to exhibit excellent properties in terms of adhesiveness, heat resistance, electrical insulating property, etc., among the polymers described above, an epoxy resin or a phenol resin is preferably employed.

At the time of incorporation of the epoxy resin into the polymer composition of this embodiment, an epoxy resin that is liquid, semi-solid or solid at normal temperature (for example, 20°C) may be employed.

Specifically, examples of the epoxy resin include an aromatic epoxy resin such as bisphenol-type epoxy resin (e.g., bisphenol A epoxy resin, bisphenol F epoxy resin, bisphenol S epoxy resin, hydrogenated bisphenol A epoxy resin, dimer acid-modified bisphenol epoxy resin), a novolak-type epoxy resin (e.g., phenol novolak epoxy resin, cresol novolak epoxy resin, biphenyl epoxy resin), a naphthalene-type epoxy resin, a fluorene-type epoxy resin (e.g., bisaryl fluorene epoxy resin), and a triphenylmethane-type epoxy resin (e.g., trishydroxyphenylmethane epoxy resin); a nitrogen-containing cyclic epoxy resin such as triepoxypropyl isocyanurate (triglycidyl isocyanurate) and hydantoin epoxy resin; an aliphatic epoxy resin; an alicyclic epoxy resin (for example, a dicyclo ring-type epoxy resin such as dicyclopentadiene epoxy resin); a glycidylether-type epoxy resin; and a glycidylamine-type epoxy resin.

In the epoxy resin, the epoxy equivalent as determined according to JIS K 7236:2009 is, for example, preferably 100 g/eq or more, more preferably 130 g/eq or more, especially preferably 150 g/eq or more.

The epoxy equivalent of the epoxy resin is, for example, preferably 10,000 g/eq or less, more preferably 9,000 g/eq or less, especially preferably 8,000 g/eq or less.

Above all, the epoxy equivalent of the epoxy resin is preferably 5,000 g/eq or less, especially preferably 1,000 g/eq or less.

In the case where the epoxy resin is solid at normal temperature, the softening point is, for example, preferably 20°C or more, more preferably 40°C or more.

The softening point of the epoxy resin is, for example, preferably 130°C or less, more preferably 90°C or less.

Among the epoxy resins described above, the epoxy resin incorporated into the polymer composition of this embodiment is preferably a triphenylmethane-type epoxy resin.

The blending ratio of the epoxy resin in the polymer composition of this embodiment is, for example, preferably 1 part by mass or more, more preferably 2 parts by mass or more, still more preferably 3 parts by mass or more, especially preferably 5 parts by mass or more, per 100 parts by mass of the aluminum nitride particle.

The blending ratio of the epoxy resin in the polymer composition of this embodiment is, for example, preferably 100 parts by mass or less, more preferably 50 parts by mass or less, still more preferably 20 parts by mass or less, especially preferably 10 parts by mass or less, per 100 parts by mass of the aluminum nitride particle.

At the time of incorporation of the epoxy resin into the polymer composition of this embodiment, a curing agent therefor may be further incorporated.

As the curing agent, for example, a latent curing agent capable of curing the epoxy resin by heating may be mentioned, and examples thereof include a phenol-based curing agent, an amine compound-based curing agent, an acid anhydride-based curing agent, an amide compound-based curing agent, and a hydrazide compound-based curing agent.

The curing agent in this embodiment is preferably a phenol-based curing agent.

Examples of the phenol-based curing agent include a novolak-type phenol resin obtained by condensing or co-condensing a phenol compound such as phenol, cresol, resorcin, catechol, bisphenol A, bisphenol F, phenylphenol and aminophenol, and/or a naphthol compound such as $\alpha$-naphthol, $\beta$-naphthol and dihydroxynaphthalene, with an aldehyde group-containing compound such as formaldehyde, benzaldehyde and salicylaldehyde, under the presence of an acid catalyst; a phenol/aralkyl resin synthesized from a phenol compound and/or a naphthol compound with dimethoxyparaxylene or bis(methoxymethyl)biphenyl; an aralkyl-type phenol resin such as biphenylene phenol/aralkyl resin and naphthol/aralkyl resin; a dicyclopentadiene-type phenol novolak resin synthesized by copolymerization of a phenol compound and/or a naphthol compound with dicyclopentadiene; a dicyclopentadiene-type phenol resin such as dicyclopentadiene naphthol novolak resin; a triphenylmethane-type phenol resin; a terpene-modified phenol resin; a paraxylylene and/or methaxylylene-modified phenol resin; and a melamine-modified phenol resin.

In the phenol-based curing agent, the hydroxyl equivalent as measured in accordance with JIS K0070:1992 is, for example, preferably 70 g/eq or more, more preferably 80 g/eq or more, especially preferably 100 g/eq or more.

The hydroxyl equivalent of the phenol-based curing agent is, for example, preferably 2,000 g/eq or less, more preferably 1,000 g/eq or less, especially preferably 500 g/eq or less.

The phenol-based curing agent is preferably a phenol novolak resin or a phenol-based curing agent represented by the following formula (1):

[Chem. 1]

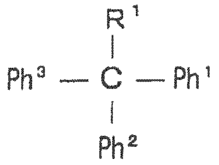

・・・ (1)

(in which "$R^1$" is a hydroxyl group, a methyl group, an ethyl group, a propyl group or a hydrogen atom, "$Ph^1$", "$Ph^2$" and "$Ph^3$" may be the same as or different from one another and each is a unsubstituted or substituted phenyl represented by the following formula (x), and at least two of "$Ph^1$", "$Ph^2$" and "$Ph^3$" are a substituted phenyl having a hydroxyl group):

[Chem. 2]

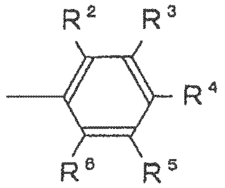

・・・ (x)

(in which each of "$R^2$" to "$R^6$" is a hydroxyl group, a methyl group, an ethyl group, a propyl group or a hydrogen atom, and "$R^2$" to "$R^6$" may be the same as or different from one another).

In the phenol-based curing agent described above, the number of hydroxyl groups in each phenyl ("$Ph^1$" to "$Ph^3$") is preferably 1 or 2.

In the phenol-based curing agent described above, each phenol preferably has no substituent other than a hydroxyl group (the members other than a hydroxyl group are preferably a hydrogen atom).

That is, the phenol-based curing agent in this embodiment is, for example, preferably 4,4',4"-methylidinetrisphenol represented by the following formula (2):

[Chem. 3]

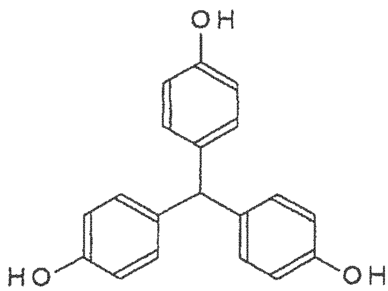

・・・ (2)

The curing agent as described above is preferably incorporated into the polymer composition, for example, in an amount of 0.1 parts by mass or more, preferably 1 part by mass or more, more preferably 10 parts by mass or more, per 100 parts by mass of the epoxy resin.

The curing agent is also preferably incorporated into the polymer composition, for example, in an amount of 500 parts by mass or less, preferably 300 parts by mass or less, more preferably 200 parts by mass or less, per 100 parts by mass of the epoxy resin.

In the case of employing a phenol-based curing agent as the curing agent, usually, the blending amount thereof is preferably adjusted such that the ratio ($N_G/N_{OH}$) between the number of hydroxyl groups ($N_{OH}$) of the phenol-based curing agent and the number of glycidyl groups ($N_G$) of the epoxy resin becomes from 0.5 to 2.0. The ratio is preferably 0.8 to 1.5, more preferably from 0.9 to 1.25.

In the polymer composition of this embodiment, one of the phenol-based curing agents above need not be used alone, and two or more phenol-based curing agents may be used in combination.

In the polymer composition of this embodiment, if necessary, a phenol-based curing agent and a curing agent except for a phenol-based curing agent (for example, an amine-based curing agent, an acid anhydride-based curing agent, a polymercaptan-based curing agent, a polyaminoamide-based curing agent, an isocyanate-based curing agent,

or a block isocyanate-based curing agent) may be used in combination.

In the polymer composition of this embodiment, a curing accelerator may also be incorporated together with the curing agent.

Specifically, for example, a curing accelerator such as imidazole compound, imidazoline compound, organic phosphine compound, acid anhydride compound, amide compound, hydrazide compound and urea compound may be incorporated into the polymer composition of this embodiment.

The curing accelerator is preferably incorporated, for example, in an amount of 0.1 parts by mass or more, more preferably 0.5 parts by mass of more, still more preferably 1 part by mass or more, per 100 parts by mass of the epoxy resin. In addition, the curing accelerator is preferably incorporated in an amount of 20 parts by mass or less, more preferably 10 parts by mass or less, especially preferably 5 parts by mass or less, per 100 parts by mass of the epoxy resin.

In the case of employing a phenol-based curing agent as the curing agent, an onium salt-based curing accelerator such as phosphonium salt-based curing accelerator and sulfonium salt-based curing accelerator is preferably employed as the curing accelerator to be incorporated into the polymer composition.

Many of the phenol-based curing agents described above have a softening point of more than 200°C, and therefore, the curing accelerator to be incorporated into the polymer composition preferably exhibits no excessive catalytic activity at a temperature of 200°C or less.

For this reason, in the polymer composition of this embodiment, a phosphonium salt-based curing accelerator such as tetraphenylphosphonium salt-based curing accelerator and triphenylphosphonium salt-based curing accelerator is especially preferably incorporated as the onium salt-based curing accelerator, and it is most preferable to incorporate tetraphenylphosphonium tetraphenylborate.

In the polymer composition, an additive such as dispersant may be further incorporated so as to enhance the wettability of the aluminum nitride particle to the polymer or suppress aggregation of the aluminum nitride particle.

In the case of incorporating a dispersant into the polymer composition, one dispersant may be used alone, or two or more dispersants may be used in combination.

The blending amount of the dispersant in the polymer composition is preferably 0.01 parts by mass or more, more preferably 0.1 parts by mass or more, per 100 parts by mass of the aluminum nitride particle.

The blending amount of the dispersant is preferably 10 parts by mass or less, more preferably 5 parts by mass or less, per 100 parts by mass of the aluminum nitride particle.

At the time of production of the polymer composition by mixing these components, it is preferable to sufficiently mix the aluminum nitride particle with the epoxy resin, etc., thereby successfully dispersing the aluminum nitride particle in the epoxy resin, etc.

The mixing may be performed, for example, by stirring or shaking the aluminum nitride particle and the epoxy resin.

The stirring can be performed by a known method of applying a shear force to the aluminum nitride particle and the epoxy resin and can be performed using a mill (e.g., ball mill, roll mill), a kneading machine (e.g., kneader, roll), a mortar, etc.

In this embodiment, as well as stirring the aluminum nitride particle and the epoxy resin, the stirring may be performed using a stirring/defoaming machine (e.g., hybrid mixer) so as to remove air bubbles from the polymer composition obtained.

The blending ratio of the aluminum nitride particle at the time of production of the polymer composition is, for example, from 10 to 4,900 parts by mass, preferably from 100 to 2,400 parts by mass, more preferably from 300 to 1,500 parts by mass, especially preferably from 400 to 1,000 parts by mass, per 100 parts by mass of the polymer.

In other words, the polymer composition is preferably produced by mixing the aluminum nitride powder and the polymer such that the concentration of the aluminum nitride powder of this embodiment in a thermal conductive molded article becomes, for example, from 9 to 98 mass%, preferably from 50 to 96 mass%, more preferably from 75 to 94 mass%, especially preferably from 80 to 91 mass%.

From the viewpoint of enhancing the handling property, a solvent may be incorporated into the polymer composition of this embodiment to form varnish.

Examples of the solvent include a hydroxyl group-containing aliphatic hydrocarbon such as alcohol (e.g., methanol, ethanol, propanol, isopropanol), a carbonyl group-containing aliphatic hydrocarbon such as ketone (e.g., acetone, methyl ethyl ketone, cyclohexanone, cyclopentanone), an aliphatic hydrocarbon (e.g., pentane, hexane), a halogenated aliphatic hydrocarbon (e.g., dichloromethane, chloroform, trichloroethane), a halogenated aromatic hydrocarbon (e.g., chlorobenzene, dichlorobenzene (specifically, ortho-dichlorobenzene)), an ether (e.g., tetrahydrofuran), an aromatic hydrocarbon (e.g., benzene, toluene, xylene), a nitrogen-containing compound (e.g., N-methylpyrrolidone (NMP), pyridine, acetonitrile, dimethylformamide), and an aprotic solvent (e.g., dimethylsulfoxide (DMS), dimethylformamide).

Other examples of the solvent include an alicyclic hydrocarbon (e.g., cyclopentane, cyclohexane), an ester (e.g., ethyl acetate), a polyol (e.g., ethylene glycol, glycerin), an acrylic monomer (e.g., isostearyl acrylate, lauryl acrylate, isoboronyl acrylate, butyl acrylate, methacrylate, acrylic acid, tetrahydrofurfuryl acrylate, 1,6-hexanediol diacrylate, 2-hydroxyethyl acrylate, 4-hydroxybutyl acrylate, phenoxyethyl acrylate, acryloylmorpholine), and a vinyl group-containing monomer (e.g., styrene, ethylene).

One of these solvents may be used alone, or two or more thereof may be used in combination.

The blending ratio of the solvent at the time of production of the polymer composition is, for example, from 30 to 1,900 parts by mass, preferably from 50 to 900 parts by mass, more preferably from 100 to 500 parts by mass, per 100 parts by mass of the polymer.

In the case where the polymer is liquid at normal temperature and normal pressure (25°C, 1 atm.) or where the polymer melts by heating, the solvent described above may not be incorporated into the polymer composition of this embodiment.

More specifically, when the polymer contained in the polymer composition exhibits by itself fluidity in an unheated state or heated state, good workability can be exhibited at the time of molding of the polymer composition to form a thermal conductive molded article, and therefore, a solvent may not be incorporated.

The thermal conductive polymer composition according to this embodiment thus exhibits good fluidity to facilitate molding into various shapes and can be employed as a forming material for various thermal conductive molded articles.

The thermal conductive molded article and the production method thereof are described below by taking, as an example, a polymer sheet obtained by molding the polymer composition into a sheet shape.

Examples of the polymer sheet include a polymer sheet obtained by forming a polymer layer including the polymer composition on one surface or both surfaces of a substrate sheet, and a polymer sheet obtained by impregnating and supporting the polymer composition in a fibrous substrate sheet, in addition to a polymer sheet composed of the polymer composition, but in the following, a polymer sheet composed of the polymer composition is mainly described.

The polymer sheet of this embodiment is, as described above, a thermal conductive molded article obtained by molding the polymer composition into a sheet shape and is suitably used, for example, as a thermal conductive sheet interposed between a heat generating member causing heat generation and a thermal conductive member for dissipating heat of the heat generating member.

The thickness of the thermal conductive sheet is appropriately set according to uses and purposes thereof but is, for example, from 1 to 1,000 μm, preferably from 10 to 600 μm, more preferably from 50 to 400 μm, especially preferably from 100 to 300 μm.

In the case where the resin contained in the polymer composition is a thermoplastic resin, the thermal conductive sheet can be produced by carrying out, for example, the following steps (1a) to (1c):

(1a) a heating step of heating the polymer composition, for example, at 100 to 350°C to enter a softened state in which the polymer composition exhibits easy deformability,
(1b) a coating film-forming step of applying the polymer composition caused to enter a softened state in the heating step above onto an appropriate support plate to form a coating film, and
(1c) a sheet forming step of cooling and thereby curing the coating film produced in the coating film-forming step above to obtain a thermal conductive sheet.

In the case where the resin contained in the resin composition is a thermosetting resin, the thermal conductive sheet can be produced by carrying out, for example, the following steps (2a) to (2c):

(2a) a heating step of heating the polymer composition to a temperature at which a curing reaction of the thermosetting resin does not excessively proceed and at which the polymer composition exhibits easy deformability (for example, from 60 to 150°C), thereby causing the composition to enter a softened state,
(2b) a coating film-forming step of applying the polymer composition caused to enter a softened state in the heating step above onto an appropriate support plate to form a coating film, and
(2c) a sheet forming step of cooling and thereby curing the coating film produced in the coating film-forming step above to obtain a thermal conductive sheet in which the thermosetting resin is in a semi-cured state (B-stage state).

In the case where the resin composition contains the solvent, the thermal conductive sheet can be produced by carrying out, for example, the following steps (3a) and (3b):

(3a) a coating film-forming step of applying the polymer composition onto an appropriate support plate to form a coating film in a wet state, and
(3b) a sheet forming step of volatilizing and removing the solvent from the coating film formed in the coating film-forming step above to obtain a dry coating film that is to be a thermal conductive sheet.

The coating film-forming step can be carried out, for example, by a known coating method such as spin coater method and bar coater method, and can be carried out by a manual application method using a known applicator.

At the time of the coating film-forming step, the viscosity of the polymer composition can be appropriately adjusted by using an evaporator, etc.

In the case where the polymer forming the dry coating film is a thermosetting resin, the dry coating film may be heated to adjust the curing degree or the dry coating film may be put into a completely cured (C-stage) state.

In particular, heating the dry coating film while applying a pressure in the thickness direction with a thermal pressing machine is advantageous in preventing the presence of an air bubble, etc. in the thermal conductive sheet.

With respect to such an advantage, the same applies to the case where the polymer constituting the thermal conductive sheet is a thermoplastic resin.

In the case of additionally carrying out the thermal pressing step after the sheet forming step, the thermal pressing step can be carried out by a method where the once produced thermal conductive sheet is continuously pressurized for about 10 minutes in a pressing machine heated to a preset temperature and then cooled while keeping on applying pressure.

In place of the method using an already-heated thermal pressing machine, the thermal pressing step may employ, for example, a method where the thermal conductive sheet is pressurized at normal temperature until reaching a preset pressure, then subjected to thermal pressing for a preset time by heating the thermal conductive sheet from the normal temperature to a preset temperature while keeping on applying pressure, and thereafter cooled to normal temperature while keeping on applying pressure.

By carrying out such a thermal pressing step, a thermal conductive sheet having a high thermal conductivity can be obtained, and in the case where the polymer contained is a thermosetting resin, a B-stage sheet or a C-stage sheet, having put into a desired cured state, can be obtained.

The heating temperature in the thermal pressing step is, for example, 60°C or more.

The heating temperature is preferably from 80 to 250°C, more preferably from 90 to 220°C, still more preferably from 100 to 200°C.

In the case of obtaining the B-stage sheet, since it is preferable not to excessively heat the thermal conductive sheet, the heating temperature in the thermal pressing step is, within the temperature range of 60°C or more, for example, preferably from 70 to 160°C, more preferably from 80 to 150°C.

In the case of obtaining the C-stage sheet, for allowing the curing to sufficiently proceed, the heating temperature is preferably 120°C or more, more preferably from 130 to 250°C, especially preferably from 150 to 220°C.

In the case of obtaining the B-stage sheet, the heating time in the thermal pressing step is preferably 5 minutes or more, more preferably from 7 to 30 minutes, especially preferably from 10 to 20 minutes.

The heating time in the case of obtaining the C-stage sheet is preferably 10 minutes or more, more preferably 30 minutes or more, especially preferably one hour or more.

Such a thermal pressing step may also be carried out under a vacuum condition.

In place of the above-described method, it is also possible to form the thermal conductive sheet by using an extrusion molding machine equipped with a flat die (T-die), etc.

The thermal conductive molded article of this embodiment can also be obtained by a molding machine other than those described above.

For example, the thermal conductive molded article of this embodiment can be molded as a thermal conductive block by putting the polymer composition in a die and carrying out thermoforming such as thermal pressing.

In the polymer composition or thermal conductive molded article of this embodiment, the aluminum nitride particle is contained to provide a predetermined particle size distribution, thereby enabling the polymer composition to exhibit excellent fluidity in the coating film-forming step, etc., and since the number of air bubbles is likely to be decreased by carrying out the thermal pressing step, not only the thermal conductivity is excellent but also a high partial discharge inception voltage and excellent mechanical strength can be achieved.

The thermal conductive sheet that is the thermal conductive molded article in a sheet shape has the above-described advantages and therefore, is suitably used, for example, as a thermal conductive sheet provided between CPU and fins or as a thermal conductive sheet of a power card utilized in an inverter, etc. of an electric vehicle.

Although the detailed description is not repeated here any more, the polymer composition and the thermal conductive molded article of this embodiment are not limited to the matters exemplified above, and appropriate changes can be added to those matters exemplified.

## EXAMPLES

The present invention is described in greater detail below by referring to Examples, but the present invention is not limited thereto.

<Preparation of Epoxy Composition>

The following materials were provided so as to prepare an epoxy composition for evaluation.

(Epoxy Resin: Ep1)

An epoxy resin having an epoxy equivalent of 169 g/eq manufactured by Nippon Kayaku Co., Ltd. (trade name: "EPPN-501HY"), which is a substance represented by the following formula (3):

[Chem. 4]

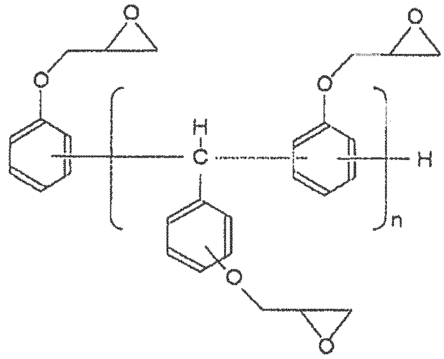

· · · (3)

(in which "n" represents a number of 1 to 3).

(Epoxy Resin: Ep2)

An epoxy resin having an epoxy equivalent of 192 g/eq manufactured by Mitsubishi Chemical Corporation (trade name: "YX4000HK"), which is a substance represented by the following formula (4):

[Chem. 5]

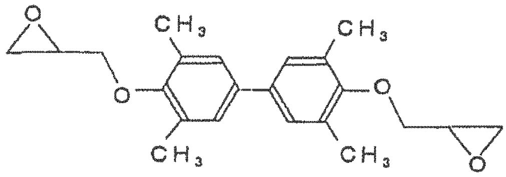

· · · (4)

(Epoxy Resin: Ep3)

An epoxy resin having an epoxy equivalent of 175 g/eq manufactured by Mitsubishi Chemical Corporation (trade name: "YL6121H"), which is a mixture of a substance represented by formula (4) described above and a substance represented by the following formula (5):

[Chem. 6]

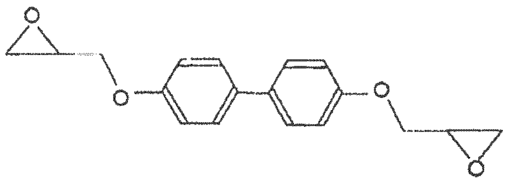

· · · (5)

(Phenol-Based Curing Agent: C1)

A substance having a hydroxyl equivalent of 105 g/eq manufactured by Gun Ei Chemical Industry Co., Ltd. (trade name: "GS-200"), represented by the following formula (6):

[Chem. 7]

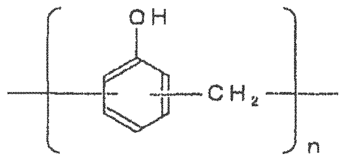

· · · (6)

(Phenol-Based Curing Agent: C2)

4,4',4"-Methylidinetrisphenol having a hydroxyl equivalent of 97 g/eq manufactured by Wako Pure Chemical Industries, Ltd., represented by the following formula (2):

[Chem. 8]

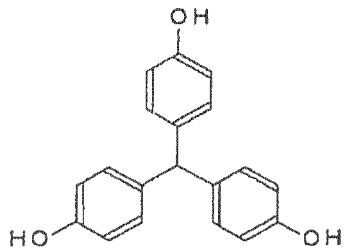

· · · (2)

(Phenol-Based Curing Agent: C3)

A substance having a hydroxyl equivalent of 138 g/eq manufactured by Honshu Chemical Industry Co., Ltd. (trade name: "DHTP-M"), represented by the following formula (7):

[Chem. 9]

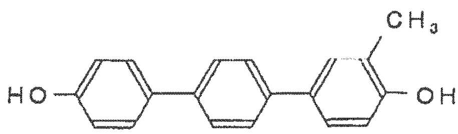

· · · (7)

(Curing Accelerator: CA)

Tetraphenylphosphonium tetraphenylborate (TPPK)

(Dispersant: D1)

A dispersant manufactured by BYK Japan K.K., trade name: "DISPER BYK-111"

(Additive: D2)

Ultrafine particle pyrogenic silica manufactured by Nippon Aerosil Co., Ltd., trade name: "AEROSIL"

(Additive: D3)

Ultrafine particle silica manufactured by Admatechs Company Limited, trade name: "ADMANANO SV-1"

(Aluminum Nitride Particle: F1 to F8)

F1: trade name "FAN-f80", manufactured by Furukawa Denshi Co., Ltd.
F2: trade name "FAN-f50j", manufactured by Furukawa Denshi Co., Ltd.

F3: trade name "FAN-f30", manufactured by Furukawa Denshi Co., Ltd.
F4: trade name "A1N200AF", manufactured by Globaltop-Materals Inc.
F5: trade name "AlN100AF", manufactured by Globaltop-Materals Inc.
F6: trade name "TOYAL NITE TM" manufactured by Toyo Aluminium K.K.
F7: trade name "FAN-f05", manufactured by Furukawa Denshi Co., Ltd.
F8: trade name "H-Grade", manufactured by Tokuyama Corporation

The aluminum nitride particle was analyzed in such a manner as illustrated in Fig. 1, and with respect to the maximum peak value in the range of 20 μm to 200 μm of the particle size distribution curve, the maximum peak intensity (P), the particle diameter ($D_m$) showing the maximum peak value, the half maximum (P/2) of the maximum peak intensity, the particle diameter ($D_H$) on the coarser particle side out of two intersections between a straight line L passing the half maximum and running in parallel with the abscissa and the particle size distribution curve, the particle diameter ($D_L$) on the finer particle side, the difference ($\Delta D_{0.5}$) between these particle diameters, and the ratio ($\Delta D_{0.5}/D_m$) of the half-width to the particle diameter at the maximum peak value were determined.
The results are shown in Table 1.

Table 1

| | Maximum Peak in Particle Size Distribution Curve | | | Particle Diameter at 1/2 Intensity | | | Ratio |
|---|---|---|---|---|---|---|---|
| | Maximum Peak Particle Diameter | Maximum Peak Intensity | 1/2 Intensity | Coarser Particle Side | Finer Particle Side | Difference | |
| | $D_m$ | P | P/2 | $D_H$ | $D_L$ | $\Delta D_{0.5}$ | $\Delta D_{0.5}/D_m$ |
| | μm | - | - | μm | μm | $D_H$-$D_L$ | - |
| F1 | 101 | 1.16 | 0.58 | 138 | 79.4 | 58.6 | 0.58 |
| F2 | 85.8 | 1.28 | 0.64 | 104 | 58.2 | 45.8 | 0.54 |
| F3 | 33.8 | 1.20 | 0.60 | 48.8 | 22.1 | 26.7 | 0.79 |
| F4 | 32.2 | 0.59 | 0.30 | 66.5 | 10.2 | 56.3 | 1.75 |
| F5 | 16.9 | 0.58 | 0.29 | 36.1 | 5.5 | 30.6 | 1.81 |
| F6 | 7.5 | 0.67 | 0.33 | 16.3 | 4.3 | 12.0 | 1.60 |
| F7 | 6.1 | 0.84 | 0.42 | 9.7 | 4.1 | 5.6 | 0.92 |
| F8 | 3.3 | 0.97 | 0.49 | 5.4 | 2.0 | 3.4 | 1.01 |

<Production of Varnish>

The formulation of an epoxy resin composition for producing a thermal conductive sheet is shown in Tables 3 to 8.
A varnish-like epoxy resin composition was prepared according to the blending amounts shown in Tables 3 to 8.
First, an epoxy resin and a phenol-based curing agent were charged into a vessel for exclusive use with a hybrid mixer.
Next, the solvent shown in the Tables, 30 mass% of methyl ethyl ketone (MEK), and 70 mass% of toluene were charged into the vessel.
At this time, the vessel into which the epoxy resin and the solvent were charged was, if desired, warmed with hot water at 70°C.
For dissolving the epoxy resin, etc., the vessel was set in a hybrid mixer and subjected to stirring.
The stirring time here was fundamentally set to 10 minutes and appropriately extended according to the degree of dissolution of the resin to produce a resin solution.
Subsequently, a predetermined amount of Aerosil was added to the resin solution, and the solution was stirred for 3 minutes in the hybrid mixer.
Furthermore, a predetermined amount of TPPK was added to the resin solution, and the solution was stirred for 3 minutes in the hybrid mixer.
Thereafter, the aluminum particle in half the amount shown in the Tables was added to the resin solution, followed by stirring for 1 minute in the hybrid mixer, and after further adding the remaining half of the aluminum nitride

particle, the mixture was stirred for 3 minutes in the hybrid mixer to produce a varnish-like epoxy resin composition.

This epoxy resin composition was subjected to a vacuum defoaming treatment for 3 minutes and used as a coating solution for the production of a thermal conductive sheet.

<Production of Thermal Conductive Sheet>

First, dust was removed from the surface of a coating table (glass plate), and a mat PET (PET) was disposed on the coating table with the roughened surface up and fixed.

Then, the coating solution above was manually applied by using an applicator for a thickness of 300 μm to form a wet coating film on the mat PET.

The mat PET having formed thereon the wet coating film was placed on an SUS-made plate and dried for 10 minutes in a dryer at 110°C.

In the case of using cyclopentanone as the solvent, drying of 130°C×10 minutes was performed, in place of the above-described conditions.

<Production of B-Stage Sheet>

The mat PET having thereon a dry coating film formed by the drying above was cut out into a predetermined size (for example, 50 mmx50 mm) to prepare a sheet sample for thermal pressing, and a required number of sheets of the sheet sample were produced.

Subsequently, as illustrated in Figs. 3, two sheets of the sheet sample (SP) were laminated so as to arrange dry coating films (S1) on the inner side to produce a laminate (mat PET (S2)/dry coating film (S1)/dry coating film (S1)/mat PET (S2)).

Using this laminate, a press set for carrying out a thermal pressing step was formed.

At the time of forming the press set, mat PET (MP)/laminate/mat PET (MP) were stacked in order from the bottom to form a primary set (L1).

The primary set (L1) was sandwiched on both sides with aluminum plates (AP) and put between top plates (EP) via one sheet of mat PET (MP) and a cushioning sheet (CS) composed of 15 sheets of cushion paper to form a press set.

The laminate structure of the press set was, in the case of one-tier primary set (L1), top plate (aluminum sheet)/cushioning sheet/mat PET/aluminum plate (AP)/primary set (L1)/aluminum plate (AP)/mat PET/cushioning sheet/top plate (aluminum plate) in order from the bottom (see, Fig. 3(A)).

The press set was formed, if desired, by alternately stacking an aluminum plate (AP) and a primary set (L1) in two to four tiers (in the case of four tiers, see Fig. 3(B)).

The press set was placed on a pressing plate heated at 120°C, pressed for 10 minutes under vacuum, and then cooled to normal temperature to adhere dry coating films to each other.

A plurality of laminates each having dry coating films integrally adhered to each other were produced by this pressing and after removing the mat PET from one surface or both surfaces, put one on top of another. By carrying out vacuum pressing of 120°C×10 minutes in the same manner, a B-stage sheet having a thickness of 400 μm, where the dry coating film was stacked in 4 layers, and a B-stage sheet having a thickness of about 1 mm, where the dry coating film was stacked in 10 layers, were produced.

At the time of vacuum pressing, if desired, a spacer was interposed to apply no excessive pressure to the laminate so as to, for example, maintain the film thickness.

Of these B-stage sheets, the sheet having a thickness of about 1 mm was utilized for the evaluation of fluidity by the compressive viscoelasticity test which will be described later.

The B-stage sheet having a thickness of 400 μm was converted to a C-stage sheet by the following method and utilized for the measurements of thermal conductivity and porosity which will be described later.

<Preparation of C-Stage Sheet>

The same press set as the press set prepared at the time of production of a B-stage sheet was prepared except for using one B-stage sheet in place of two sheets of the sheet sample cut out from the mat PET having formed thereon a dry coating film, and this press set prepared was placed on a pressing plate heated at 180°C, pressed for 10 minutes under vacuum and then cooled to normal temperature to produce a C-stage sheet.

At the time of vacuum pressing, if desired, a spacer was interposed to apply no excessive pressure to the laminate so as to, for example, maintain the film thickness.

The conditions in the production of the B-stage sheet and the C-stage sheet are based on the above-described conditions, but the pressing temperature, the pressing time, etc. were appropriately changed according to the formulation.

Details of the pressing conditions are shown in Tables 3 to 8 together with the results of the following evaluations.

(Evaluation Method)

<Measurement of Particle Diameter/Shape>

With respect to the aluminum nitride particles of F1 to F8, the particle diameter, the particle size distribution and the particle shape were confirmed as follows.

(1) Laser Diffraction/Scattering Method

About 50 mg of particles were dispersed in 1 cc of a measurement solvent, and the dispersion was subjected to an ultrasonic treatment for 10 minutes to prepare a particle dispersion liquid for particle size distribution measurement.

A diluting solvent was put in a vessel for particle size distribution measurement, and an appropriate amount of the particle dispersion liquid above was further put in the vessel for measurement. After stirring, the particle size distribution was measured using "SALD-2100" manufactured by Shimadzu Corporation.

(2) Image Analysis Method

First, a predetermined amount of particles of 1 to 19 $mm^3$ were dispersed and fixed on a glass plate by using a compressive air.

Next, an optical image of particles fixed in an area of 5 to 20 mm square was obtained using a particle image analyzer, "Morphologi G3", manufactured by Spectris Co., Ltd.

From the obtained image of 100,000 to 1,000,000 particles, the particle size distribution was analyzed through a filter treatment performed using a parameter "solidity=0.91 ".

At the time of analysis of the particle size distribution and the average particle diameter, the obtained data were converted in terms of volume and subjected to smoothing by using 11 elements of each data.

With respect to the particle size distribution curve converted in terms of volume, the peak width (difference between large and small particle diameters) at the position of half the peak height of the average particle diameter was determined as the half-width [$\Delta D_{0.5}$ (μm)], and the ratio [$D_{is}$] thereof to the average particle diameter [Dm (μm)] above was determined according to the following formula (a):

$$D_{is}=(\Delta D_{0.5}/D_m) \qquad (a)$$

Furthermore, in the analysis of particle size distribution, the maximum value (peak) of the particle size distribution curve in two regions, i.e., a region of 20 μm to 200 μm (hereinafter, sometimes referred to as "range (A)") and a range of 0.1 μm to 10 μm (hereinafter, sometimes referred to as "range (B)"), was analyzed.

The relationship of the minimum value (hereinafter, sometimes referred to as "minimum value (C)") of the particle size distribution curve between the maximum value (hereinafter, sometimes referred to as "peak (A)") in the range (A) and the maximum value (hereinafter, sometimes referred to as "peak (B)") in the range (B), with the peak (A) and the peak (B) was also analyzed.

(Evaluation 1: (A)/(B) Ratio)

The ratio (hereinafter, sometimes referred to as "AB ratio") of the peak (A) to the peak (B) was calculated based on the following formula:

$$\text{AB Ratio} = [\text{peak (A) height}]/[\text{peak (B) height}]$$

In the Tables, the results from judging this AB ratio as follows based on the following conditions are shown.

Condition 1: (AB ratio)<1.2
Condition 2: 1.2≤(AB ratio)
Condition 3: 1.5≤(AB ratio)≤15
Condition 4: 2≤(AB ratio)≤4

(Judgment)

"C": In the case where the ratio falls under condition 1.
"B": In the case where the ratio falls only under condition 2.
"A": In the case where the ratio falls under conditions 2 and 3 but does not fall under condition 4.
"AA": In the case where the ratio falls under all of conditions 2 to 4.

(Evaluation 2: (A)/(C) Ratio, (B)/(C) Ratio)

The ratio (hereinafter, sometimes referred to as "AC ratio") of the minimum value (C) to the peak (A) and the ratio (hereinafter, sometimes referred to as "BC ratio") of the minimum value (C) to the peak (B) were calculated based on the following formulae:

$$\text{AC Ratio}=[\text{peak (A) height}]/[\text{minimum value (C) height}]$$

$$\text{BC Ratio}=[\text{peak (B) height}]/[\text{minimum value (C) height}]$$

In the Tables, the results from judging this AB ratio as follows based on the following conditions are shown.

Condition 1: (AC ratio)≤3 or (BC ratio)≤2
Condition 2: 3<(AC ratio) and 2<(BC ratio)
Condition 3: 8≤(AC ratio)≤120 and 3≤(BC ratio)≤100
Condition 4: 30≤(AC ratio)≤60 and 4≤(BC ratio)≤20
Condition 5: 30≤(AC ratio)≤40 and 10≤(BC ratio)≤15

(Judgment)

"C": In the case where the ratios fall under condition 1.
"B": In the case where the ratios fall only under condition 2.
"AB": In the case where the ratios fall under conditions 2 and 3 but do not fall under conditions 4 and 5.
"A": In the case where the ratios fall under conditions 2 to 4 but do not fall under condition 5.
"AA": In the case where the ratios fall under all of conditions 2 to 5.

<Evaluation of Porosity>

Using the C-stage sheet having a thickness of 400 μm, the percentage of voids (porosity) contained in the C-stage sheet was evaluated.

The porosity ($\phi$) was calculated from the theoretical density ($\rho_T$) and the measured density ($\rho_E$) according to the following formula (b):

$$\text{Porosity } (\phi)=(1-\rho_E/\rho_T) \qquad \text{(b)}$$

The measured density ($\rho_E$) was determined using a density measuring apparatus manufactured by METLER TOLEDO.

More specifically, the measured density ($\rho_E$) was obtained by an in-water substitution method using water at 25°C in accordance with JIS K7112:1999.

The theoretical density ($\rho_T$) was calculated assuming that the density of aluminum nitride is 3.26 g/cm$^3$ and the density of epoxy resin, etc. is 1.3 g/cm$^3$.

For example, by regarding 100 g of a polymer composition containing 85.3 mass% of aluminum nitride particle as being constituted only by an aluminum nitride particle having a volume of 26.2 cm$^3$ (85.3/3.26) and a polymer having

a volume of 11.3 $cm^3$ (14.7/1.3), the theoretical density was calculated as about 2.66 $g/cm^3$ (100/(26.2+11.3)).

In the Tables, the results from judging the porosity as follows are shown.

"C": In the case where the porosity is 3.0% or more.
"A": In the case where the porosity is less than 3.0%.

<Evaluation of Thermal Conductivity>

A square test piece with one side being 1 cm and a circular test piece with a diameter of 2.5 cm were cut out from a C-stage sheet having a thickness of 400 μm produced as above, and FC-153 Black Guard Spray as an antireflection agent for laser processing was thinly applied (dry thickness: 10 μm or less) as a blackening treatment onto each of the light-receiving part and the detection part. The square test piece was used as a sample for thermal diffusivity measurement in the thickness direction, and the circular test piece was used as a sample for thermal diffusivity measurement in the plane direction.

The thermal diffusivities in the thickness direction and the plane direction of the C-stage sheet were measured using xenon flash under the evaluation conditions shown in Table 2 below, and the thermal conductivity was determined by multiplying the obtained thermal diffusivity by the theoretical density calculated above and a theoretical specific heat.

Table 2

| (Xenon Flash Condition) | | |
|---|---|---|
| | Thickness Direction | Plane Direction |
| Pulse width | Medium | Long |
| Output power of light source | 224 V | 304 V |
| Analysis model (single layer model) | Cowan + pulse collection | In-plane anisotropic + pulse collection |
| Optical filter | 100% | 100% |
| Auto Adjust | used | used |
| Measurement temperature | 25°C | 25°C |

The theoretical specific heat of the polymer composition was calculated assuming that the specific heat of aluminum nitride particle is 0.74 kJ/kgK and the specific heat of epoxy resin, etc. is 1.5 kJ/kgK.

For example, the theoretical specific heat of a polymer containing 85.3 mass% of aluminum nitride particle was calculated as about 0.85 kJ/kgK ($0.853\times0.74+0.147\times1.5$).

<Evaluation of Fluidity>

A compressive viscoelasticity test was carried out using a sheet produced to have a thickness of about 1 mm by the method above.

A square test piece with one side being 15 mm was cut out from the B-stage sheet.

The test piece was placed on a stage of a tensile compression tester (texture analyzer) manufactured by EKO Instruments Co., Ltd. and after setting the temperature atmosphere to 80°C by means of a constant temperature bath attached to the tester, a compression test was performed using a stainless steel-made probe of $\phi$ 5 mm.

The compressive modulus at this time was determined and judged as an index for fluidity as follows.

(Judgment: Criteria)

"C": In the case where the compressive modulus is 100 MPa or more.
"B": In the case where the compressive modulus is 50 MPa or more and less than 100 MPa.
"AB": In the case where the compressive modulus is 25 MPa or more and less than 50 MPa.
"A": In the case where the compressive modulus is 10 MPa or more and less than 25 MPa.
"AA": In the case where the compressive modulus is less than 10 MPa.

Table 3

| | | | Example | | | | | |
|---|---|---|---|---|---|---|---|---|
| | | | 1 | 2 | 3 | 4 | 5 | 6 |
| | | Density | | | | | | |
| Epoxy | Ep1 | 1.3 | 3.59 | 3.59 | 3.59 | 3.59 | 3.59 | 7.18 |
| | Ep2 | 1.3 | | | | | | |
| | Ep3 | 1.3 | | | | | | |
| Curing agent | C1 | 1.3 | 2.23 | 2.23 | 2.23 | 2.23 | 2.23 | 4.46 |
| | C2 | 1.3 | | | | | | |
| | C3 | 1.3 | | | | | | |
| Curing accelerator | CA | 1.3 | 0.04 | 0.04 | 0.04 | 0.04 | 0.04 | 0.072 |
| Subtotal | | | 5.85 | 5.85 | 5.85 | 5.85 | 5.85 | 11.72 |
| Solvent | MEK | - | 4.2 | 3.6 | 3.5 | 4.2 | 3.7 | 3.6 |
| | Toluene | - | 9.7 | 8.4 | 8.1 | 9.7 | 8.7 | 8.4 |
| | Cyetopentanone | - | | | | | | |
| Subtotal | | | 19.75 | 17.85 | 17.45 | 19.75 | 18.25 | 23.72 |
| Aluminum nitride particle | F1 | 3.26 | 33.79 | | | | | |
| | F2 | 3.26 | | 33.79 | | 30.41 | 27.03 | 47.39 |
| | F3 | 3.26 | | | 33.79 | | | |
| | F4 | 3.26 | | | | | | |
| | F5 | 3.26 | | | | | | |
| | F6 | 3.26 | | | | | | |
| | F7 | 3.26 | | | | 3.38 | 6.76 | 20.31 |
| | F8 | 3.26 | | | | | | |
| Dispersant | D1 | 1.16 | | | | | | |
| Additive | D2 | 2.15 | 0.29 | 0.29 | 0.29 | 0.29 | 0.29 | 0.582 |
| | D3 | 2.15 | | | | | | |

(continued)

| | | | | Example | | | | | |
|---|---|---|---|---|---|---|---|---|---|
| | | | | 1 | 2 | 3 | 4 | 5 | 6 |
| Total amount of solid matters | | | | 39.93 | 39.93 | 39.93 | 39.93 | 39.93 | 80.00 |
| AIN content (wt%) | | | | 84.6 | 84.6 | 84.6 | 84.6 | 84.6 | 84.6 |
| Content of inorganic material (vol%) | | | | 70 | 70 | 70 | 70 | 70 | 70 |
| Theoretical Density ($g/cm^3$) | | | | 2.66 | 2.66 | 2.66 | 2.66 | 2.66 | 2.66 |
| Theoretical specific heat (kJ/kg·K) | | | | 0.852 | 0.852 | 0.852 | 0.852 | 0.852 | 0.852 |
| | | | | | | | | | |
| | | Dm | $\Delta D_{0.5}/D_m$ | | | | | | |
| Particle size distribution condition of aluminum nitride particle and evaluation (Dm: average particle diameter, $\Delta D_{0.5}$: half-width) | F1 | 101 | 0.58 | 100 | 0 | 0 | 0 | 0 | 0 |
| | F2 | 85.8 | 0.54 | 0 | 100 | 0 | 90 | 80 | 70 |
| | F3 | 33.8 | 0.79 | 0 | 0 | 100 | 0 | 0 | 0 |
| | F4 | 32.2 | 1.75 | 0 | 0 | 0 | 0 | 0 | 0 |
| | F5 | 16.9 | 1.81 | 0 | 0 | 0 | 0 | 0 | 0 |
| | F6 | 7.5 | 1.6 | 0 | 0 | 0 | 0 | 0 | 0 |
| | F7 | 6.1 | 0.92 | 0 | 0 | 0 | 10 | 20 | 30 |
| | F8 | 3.3 | 1.01 | 0 | 0 | 0 | 0 | 0 | 0 |
| | | | | | | | | | |
| | Peak (A) | | Intensity | 1.159 | 1.279 | 1.202 | 1.151 | 1.023 | 0.895 |
| | | | Particle diameter | 101 | 85.8 | 33.8 | 85.8 | 85.8 | 85.8 |
| | Peak (B) | | Intensity | - | - | - | 0.093 | 0.176 | 0.258 |
| | Minimum value (C) | | Intensity | - | - | - | 0.021 | 0.023 | 0.024 |
| | | | | | | | | | |
| | Evaluation 1 | | AB Ratio | - | - | - | 12.31 | 5.81 | 3.46 |
| | | | Judgment | - | - | - | A | A | AA |

(continued)

| | | | | Example | | | | | |
|---|---|---|---|---|---|---|---|---|---|
| | | | | 1 | 2 | 3 | 4 | 5 | 6 |
| | Evaluation 2 | AC Ratio | | - | - | - | 53.88 | 43.94 | 37.98 |
| | | BC Ratio | | - | - | - | 4.38 | 7.56 | 10.96 |
| | | Judgment | | - | - | - | A | A | AA |
| Conditions in production (thermal pressing) of B-stage sheet | | Temperature (°C) | 120 | 120 | 120 | 120 | 120 | 120 | |
| | | Pressure (MPa)*1 | 15 | 15 | 15 | 15 | 5(S) | 3(S) | |
| | | Time (min) | 10 | 10 | 10 | 10 | 10 | 10 | |
| Conditions in production (thermal pressing) of C-stage sheet | | Temperature (°C) | | | | 180 | 180 | 180 | |
| | | Pressure (MPa)*1 | | | | 15 | 10(S) | 2(S) | |
| | | Time (min) | | | | 60 | 60 | 10 | |
| Density of C-stage sheet | Theoretical value | $g/cm^3$ | 2.66 | 2.66 | 2.66 | 2.66 | 2.66 | 2.66 | |
| | Measured value | $g/cm^3$ | | | | 2.6 | 2.6 | 2.59 | |
| Porosity of C-stage sheet | | (%) | | | | 2.2 | 2.4 | 2.7 | |
| | | Judgment | | | | A | A | A | |
| Thermal conductivity of C- stage sheet | Thickness direction | W/mK | | | | 10.5 | 6.5 | 4.2 | |
| | Plane direction | W/mK | | | | 6.6 | 5.7 | 5.1 | |
| Fluidity of B-stage sheet | | Modulus (MPa) | 28.8 | 15.3 | 99.6 | 24.1 | 12.7 | 4.9 | |
| | | Judgement | AB | A | B | A | A | AA | |

*1 "(S)" in the pressure indicates that a spacer was used.

Table 4

| | | | Example | | | | | |
|---|---|---|---|---|---|---|---|---|
| | | | 7 | 8 | 9 | 10 | 11 | 12 |
| | | Density | | | | | | |
| Epoxy | Ep1 | 1.3 | 3.59 | 3.59 | 3.59 | 3.59 | 3.59 | 3.59 |
| | Ep2 | 1.3 | | | | | | |
| | Ep3 | 1.3 | | | | | | |
| Curing agent | C1 | 1.3 | 2.23 | 2.23 | 2.23 | 2.23 | 2.23 | 2.23 |
| | C2 | 1.3 | | | | | | |
| | C3 | 1.3 | | | | | | |
| Curing accelerator | CA | 1.3 | 0.04 | 0.04 | 0.04 | 0.04 | 0.04 | 0.04 |
| Subtotal | | | 5.85 | 5.85 | 5.85 | 5.85 | 5.85 | 5.85 |
| Solvent | MEK | - | 3.7 | 3.6 | 4.0 | 4.2 | 3.7 | 3.7 |
| | Toluene | - | 8.7 | 8.4 | 9.4 | 9.7 | 8.7 | 8.7 |
| | Cyclopentanone | - | | | | | | |
| Subtotal | | | 18.25 | 17.85 | 19.25 | 19.75 | 18.25 | 18.25 |
| Aluminum nitride particle | F1 | 3.26 | | | 23.65 | 23.65 | | |
| | F2 | 3.26 | 20.27 | 16.89 | | | 23.65 | 20.27 |
| | F3 | 3.26 | | | | | | |
| | F4 | 3.26 | | | | | | |
| | F5 | 3.26 | | | | | | |
| | F6 | 3.26 | | | 10.14 | | 10.14 | |
| | F7 | 3.26 | 13.52 | 16.89 | | | | |
| | F8 | 3.26 | | | | 10.14 | | 13.52 |
| Dispersant | D1 | 1.16 | | | | | | |
| Additive | D2 | 2.15 | 0.29 | 0.29 | 0.29 | 0.29 | 0.29 | 0.29 |
| | D3 | 2.15 | | | | | | |

(continued)

| | | | | Example | | | | | |
|---|---|---|---|---|---|---|---|---|---|
| | | | | 7 | 8 | 9 | 10 | 11 | 12 |
| Total amount of solid matters | | | | 39.93 | 39.93 | 39.93 | 39.93 | 39.93 | 39.93 |
| AlN content (wt%) | | | | 84.6 | 84.6 | 84.6 | 84.6 | 84.6 | 84.6 |
| Content of inorganic material (vol%) | | | | 70 | 70 | 70 | 70 | 70 | 70 |
| Theoretical density (g/cm$^3$) | | | | 2.66 | 2.66 | 2.66 | 2.66 | 2.66 | 2.66 |
| Theoretical specific heat (kJ/kg•K) | | | | 0.852 | 0.852 | 0.852 | 0.852 | 0.852 | 0.852 |
| | | | | | | | | | |
| | | Dm | $\Delta D_{0.5}/D_m$ | | | | | | |
| Particle size distribution condition of aluminum nitride particle and evaluation (Dm: average particle diameter, $\Delta D_{0.5}$: half-width) | F1 | 101 | 0.58 | 0 | 0 | 70 | 70 | 0 | 0 |
| | F2 | 85.8 | 0.54 | 60 | 50 | 0 | 0 | 70 | 60 |
| | F3 | 33.8 | 0.79 | 0 | 0 | 0 | 0 | 0 | 0 |
| | F4 | 32.2 | 1.75 | 0 | 0 | 0 | 0 | 0 | 0 |
| | F5 | 16.9 | 1.81 | 0 | 0 | 0 | 0 | 0 | 0 |
| | F6 | 7.5 | 1.6 | 0 | 0 | 30 | 0 | 30 | 0 |
| | F7 | 6.1 | 0.92 | 40 | 50 | 0 | 0 | 0 | 0 |
| | F8 | 3.3 | 1.01 | 0 | 0 | 0 | 30 | 0 | 40 |
| | | | | | | | | | |
| | Peak (A) | | Intensity | 0.767 | 0.639 | 0.811 | 0.811 | 0.895 | 0.767 |
| | | | Particle diameter | 85.8 | 85.8 | 101 | 101 | 85.8 | 85.8 |
| | Peak (B) | | Intensity | 0.341 | 0.423 | 0.204 | 0.293 | 0.213 | 0.389 |
| | Minimum value (C) | | Intensity | 0.024 | 0.024 | 0.048 | 0.008 | 0.05 | 0.015 |
| | | | | | | | | | |
| | Evaluation 1 | | AB Ratio | 2.25 | 1.51 | 3.97 | 2.77 | 4.21 | 1.97 |
| | | | Judgment | AA | A | AA | AA | A | A |

(continued)

| | | | | Example | | | | | |
|---|---|---|---|---|---|---|---|---|---|
| | | | | 7 | 8 | 9 | 10 | 11 | 12 |
| | Evaluation 2 | | AC Ratio | 32.25 | 26.63 | 17.08 | 103.94 | 18.04 | 52.03 |
| | | | BC Ratio | 14.33 | 17.63 | 4.30 | 37.51 | 4.29 | 26.40 |
| | | | Judgment | AA | AB | AB | AB | AB | A |
| Conditions in production (thermal pressing) of B-stage sheet | | Temperature (°C) | 120 | 120 | 120 | 120 | 120 | 120 | |
| | | Pressure (MPa)*1 | 5(S) | 10(S) | 15 | 15 | 15 | 15 | |
| | | Time (min) | 10 | 10 | 10 | 10 | 10 | 10 | |
| Conditions in production (thermal pressing) of C-stage sheet | | Temperature (°C) | 180 | 180 | | | | 180 | |
| | | Pressure (MPa)*1 | 10(S) | 10(S) | | | | 15 | |
| | | Time (min) | 60 | 60 | | | | 60 | |
| Density of C-stage sheet | Theoretical value | $g/cm^3$ | 2.66 | 2.66 | 2.66 | 2.66 | 2.66 | 2.66 | |
| | Measured value | $g/cm^3$ | 2.61 | 2.64 | | | | 2.64 | |
| Porosity of C-stage sheet | | (%) | 1.7 | 0.6 | | | | 0.7 | |
| | | Judgement | A | A | | | | A | |
| Thermal conductivity of C- stage sheet | Thickness direction | W/mK | 5.5 | 6.3 | | | | 8.3 | |
| | Plane direction | W/mK | 5.7 | 5.6 | | | | 8 | |
| Fluidity of B-stage sheet | | Modulus (MPa) | 3.1 | 46 | 39.9 | 27.3 | 34.2 | 19.4 | |
| | | Judgment | AA | AB | AB | AB | AB | A | |

*1 "(S)" in the pressure indicates that a spacer was used.

Table 5

| | | | Example | | | | | |
|---|---|---|---|---|---|---|---|---|
| | | | 13 | 14 | 15 | 16 | 17 | 18 |
| | | Density | | | | | | |
| Epoxy | Ep1 | 1.3 | 3.59 | 3.59 | 7.18 | 5.77 | 5.77 | 3.57 |
| | Ep2 | 1.3 | | | | | | |
| | Ep3 | 1.3 | | | | | | |
| Curing agent | C1 | 1.3 | 2.23 | 2.23 | 4.46 | 3.59 | 3.59 | 2.22 |
| | C2 | 1.3 | | | | | | |
| | C3 | 1.3 | | | | | | |
| Curing accelerator | CA | 1.3 | 0.04 | 0.04 | 0.072 | 0.058 | 0.058 | 0.036 |
| Subtotal | | | 5.85 | 5.85 | 11.72 | 9.41 | 9.41 | 5.82 |
| Solvent | MEK | - | 3.7 | 3.9 | 4.7 | 4.9 | 4.0 | 2.3 |
| | Toluene | - | 8.7 | 9.0 | 10.9 | 11.5 | 9.4 | 5.4 |
| | Cyclopentanone | - | | | | | | |
| Subtotal | | | 18.25 | 18.75 | 27.32 | 25.81 | 22.81 | 13.52 |
| Aluminum nitride particle | F1 | 3.26 | | | | | | |
| | F2 | 3.26 | | | 51.79 | 53.64 | 49.08 | 23.7 |
| | F3 | 3.26 | 20.27 | 23.65 | | | | |
| | F4 | 3.26 | | | | | | |
| | F5 | 3.26 | | | | | | |
| | F6 | 3.26 | | | | | | |
| | F7 | 3.26 | 13.52 | | 9.14 | 9.47 | 21.04 | 10.16 |
| | F8 | 3.26 | | 10.14 | 6.77 | 7.01 | | |
| Dispersant | D1 | 1.16 | | | | | | 0.034 |
| Additive | D2 | 2.15 | 0.29 | 0.29 | 0.582 | 0.467 | 0.467 | 0.291 |
| | D3 | 2.15 | | | | | | |

(continued)

| | | | | Example 13 | Example 14 | Example 15 | Example 16 | Example 17 | Example 18 |
|---|---|---|---|---|---|---|---|---|---|
| Total amount of solid matters | | | | 39.93 | 39.93 | 80.00 | 80.00 | 80.00 | 40.00 |
| AlN content (wt%) | | | | 84.6 | 84.6 | 84.6 | 87.6 | 87.6 | 84.6 |
| Content of inorganic material (vol%) | | | | 70 | 70 | 70 | 75 | 75 | 70 |
| Theoretical density (g/cm$^3$) | | | | 2.66 | 2.66 | 2.66 | 2.76 | 2.76 | 2.66 |
| Theoretical specific heat (kJ/kg•K) | | | | 0.852 | 0.852 | 0.852 | 0.83 | 0.83 | 0.852 |
| | | | | | | | | | |
| | | Dm | $\Delta D_{0.5}/D_m$ | | | | | | |
| Particle size distribution condition of aluminum nitride particle and evaluation (Dm: average particle diameter, $\Delta D_{0.5}$: half-width) | F1 | 101 | 0.58 | 0 | 0 | 0 | 0 | 0 | 0 |
| | F2 | 85.8 | 0.54 | 0 | 0 | 76 | 76 | 70 | 70 |
| | F3 | 33.8 | 0.79 | 60 | 70 | 0 | 0 | 0 | 0 |
| | F4 | 32.2 | 1.75 | 0 | 0 | 0 | 0 | 0 | 0 |
| | F5 | 16.9 | 1.81 | 0 | 0 | 0 | 0 | 0 | 0 |
| | F6 | 7.5 | 1.6 | 0 | 0 | 0 | 0 | 0 | 0 |
| | F7 | 6.1 | 0.92 | 40 | 0 | 14 | 14 | 30 | 30 |
| | F8 | 3.3 | 1.01 | 0 | 30 | 10 | 10 | 0 | 0 |
| | | | | | | | | | |
| | Peak (A) | | Intensity | 0.784 | 0.841 | 0.978 | 0.978 | 0.895 | 0.895 |
| | | | Particle diameter | 34.1 | 33.8 | 85.8 | 85.8 | 85.8 | 85.8 |
| | Peak (B) | | Intensity | 0.338 | 0.293 | 0.161 | 0.161 | 0.258 | 0.258 |
| | Minimum value (C) | | Intensity | 0.096 | 0.029 | 0.021 | 0.021 | 0.024 | 0.024 |
| | | | | | | | | | |
| | Evaluation 1 | | AB Ratio | 2.32 | 2.87 | 11.39 | 11.39 | 3.46 | 3.47 |
| | | | Judgement | AA | AA | A | A | AA | AA |

(continued)

| | | | Example 13 | Example 14 | Example 15 | Example 16 | Example 17 | Example 18 |
|---|---|---|---|---|---|---|---|---|
| Evaluation 2 | AC Ratio | | 8.17 | 28.63 | 35.19 | 35.19 | 37.98 | 37.98 |
| | BC Ratio | | 3.52 | 9.97 | 3.09 | 3.09 | 10.96 | 10.96 |
| | Judgment | | AB | AB | AB | AB | AA | AA |
| Conditions in production (thermal pressing) of B-stage sheet | | Temperature (°C) | 120 | 120 | 70 | 120 | 120 | 120 |
| | | Pressure (MPa)*1 | 15 | 15 | 10 | 15 | 10 | 3(S) |
| | | Time (min) | 10 | 10 | 10 | 10 | 10 | 10 |
| Conditions in production (thermal pressing) of C-stage sheet | | Temperature (°C) | | 180 | 150/180*2 | 180 | 180 | 180 |
| | | Pressure (MPa)*1 | | 15 | 0.4/5*2 | 15 | 15 | 2(S) |
| | | Time (min) | | 60 | 30/10*2 | 10 | 10 | 10 |
| Density of C-stage sheet | Theoretical value | $g/cm^3$ | 2.66 | 2.66 | 2.66 | 2.76 | 2.76 | 2.66 |
| | Measured value | $g/cm^3$ | | 2.58 | 2.61 | 2.72 | 2.75 | 2.66 |
| Porosity of C-stage sheet | | (%) | | 2.97 | 2.1 | 1.7 | 0.6 | 0.3 |
| | | Judgement | | A | A | A | A | A |
| Thermal conductivity of C- stage sheet | Thickness direction | W/mK | | 9.5 | 5.6 | 11.4 | 10.2 | 5.5 |
| | Plane direction | W/mK | | 8.2 | 5.4 | 9.3 | 8.5 | 7.1 |
| Fluidity of B-stage sheet | | Modulus (MPa) | 30.7 | | | | | |
| | | Judgment | AB | | | | | |

*1 "(S)" in the pressure indicates that a spacer was used.
*2 Production of C-stage sheet in Example 15 was carried out by pressing for 30 minutes under the conditions of 150°C and 0.4 MPa and then pressing for 10 minutes by raising the temperature to 180°C and the pressure to 5 MPa.

Table 6

| | | | Example | | | | |
|---|---|---|---|---|---|---|---|
| | | | 19 | 20 | 21 | 22 | 23 |
| | | Density | | | | | |
| Epoxy | Ep1 | 1.3 | 2.49 | | | | |
| | Ep2 | 1.3 | | 3.35 | | 2.93 | |
| | Ep3 | 1.3 | | | 3.24 | | 2.82 |
| Curing agent | C1 | 1.3 | 1.55 | | | | |
| | C2 | 1.3 | | | | 2.11 | 2.22 |
| | C3 | 1.3 | | 1.69 | 1.8 | | |
| Curing accelerator | CA | 1.3 | 0.025 | 0.0335 | 0.0324 | 0.0293 | 0.0282 |
| Subtotal | | | 4.06 | 5.07 | 5.07 | 5.07 | 5.07 |
| Solvent | MEK | - | 2.9 | | | | |
| | Toluene | - | 6.7 | | | | |
| | Cyclopentanone | - | | 11.8 | 11.8 | 13.7 | 13.7 |
| Subtotal | | | 13.66 | 16.87 | 16.87 | 18.77 | 18.77 |
| Aluminum nitride particle | F1 | 3.26 | | | | | |
| | F2 | 3.26 | 21.37 | 20.5 | 20.5 | 20.5 | 20.5 |
| | F3 | 3.26 | | | | | |
| | F4 | 3.26 | | | | | |
| | F5 | 3.26 | | | | | |
| | F6 | 3.26 | | | | | |
| | F7 | 3.26 | 9.16 | 8.79 | 8.79 | 8.79 | 8.79 |
| | F8 | 3.26 | | | | | |
| Dispersant | D1 | 1.16 | 0.031 | | | | |
| Additive | D2 | 2.15 | 0.2 | 0.291 | 0.291 | 0.291 | 0.291 |
| | D3 | 2.15 | | 0.25 | 0.25 | 0.25 | 0.25 |
| Total amount of solid matters | | | 34.83 | 34.61 | 34.61 | 34.61 | 34.61 |
| AIN content (wt%) | | | 87.7 | 85.0 | 85.0 | 85.0 | 85.0 |
| Content of inorganic material (vol%) | | | 75 | 70 | 70 | 70 | 70 |
| Theoretical density ($g/cm^3$) | | | 2.76 | 2.66 | 2.66 | 2.66 | 2.66 |
| Theoretical specific heat (kJ/kg·K) | | | 0.83 | 0.85 | 0.85 | 0.85 | 0.85 |

| | | | | | | | | |
|---|---|---|---|---|---|---|---|---|
| | | | | | | | | |
| | | Dm | $\Delta D_{0.5}$/Dm | | | | | |
| | F | 101 | 0.58 | 0 | 0 | 0 | 0 | 0 |
| | F2 | 85.8 | 0.54 | 70 | 70 | 70 | 70 | 70 |
| | F3 | 33.8 | 0.79 | 0 | 0 | 0 | 0 | 0 |
| | F4 | 32.2 | 1.75 | 0 | 0 | 0 | 0 | 0 |
| | F5 | 16.9 | 1.81 | 0 | 0 | 0 | 0 | 0 |

(continued)

| | | | | Example | | | | |
|---|---|---|---|---|---|---|---|---|
| | | | | 19 | 20 | 21 | 22 | 23 |
| Particle size distribution condition of aluminum nitride particle and evaluation (Dm: average particle diameter, $\Delta D_{0.5}$ half-width) | F6 | 7.5 | 1.6 | 0 | 0 | 0 | 0 | 0 |
| | F7 | 6.1 | 0.92 | 30 | 30 | 30 | 30 | 30 |
| | F8 | 3.3 | 1.01 | 0 | 0 | 0 | 0 | 0 |
| | | | | | | | | |
| | Peak (A) | | Intensity | 0.895 | 0.895 | 0.895 | 0.895 | 0.895 |
| | | | Particle diameter | 85.8 | 85.8 | 85.8 | 85.8 | 85.8 |
| | Peak (B) | | Intensity | 0.258 | 0.258 | 0.258 | 0.258 | 0.258 |
| | Minimum value (C) | | Intensity | 0.024 | 0.024 | 0.024 | 0.024 | 0.024 |
| | | | | | | | | |
| | Evaluation 1 | | AB Ratio | 3.46 | 3.46 | 3.46 | 3.46 | 3.46 |
| | | | Judgment | AA | AA | AA | AA | AA |
| | Evaluation 2 | | AC Ratio | 37.98 | 37.98 | 37.98 | 37.98 | 37.98 |
| | | | BC Ratio | 10.96 | 10.96 | 10.96 | 10.96 | 10.96 |
| | | | Judgment | AA | AA | AA | AA | AA |
| Conditions in production (thermal pressing) of B-stage sheet | | Temperature (°C) | 120 | 120 | 120 | 120 | 130 | |
| | | Pressure (MPa)*1 | 15 | 10 | 10 | 15 | 15 | |
| | | Time (min) | 10 | 10 | 10 | 10 | 10 | |
| Conditions in production (thermal pressing) of C-stage sheet | | Temperature (°C) | 180 | 180 | 180 | 180 | 180 | |
| | | Pressure (MPa)*1 | 15 | 10 | 10 | 15 | 15 | |
| | | Time (min) | 10 | 60 | 60 | 60 | 60 | |
| Density of C-stage sheet | Theoretical value | $g/cm^3$ | 2.76 | 2.66 | 2.66 | 2.66 | 2.66 | |
| | Measured value | $g/cm^3$ | 2.76 | 2.63 | 2.62 | 2.65 | 2.63 | |
| Porosity of C-stage sheet | | (%) | 0.2 | 1.1 | 1.3 | 0.5 | 1.3 | |
| | | Judgment | A | A | A | A | A | |
| Thermal conductivity of C-stage sheet | Thickness direction | W/mK | 11.9 | 8.9 | 10 | 9.4 | 11 | |
| | Plane direction | W/mK | 9.7 | 8.1 | 8.6 | 9 | 10.5 | |
| Fluidity of B-stage sheet | | Modulus (MPa) | | 8.9 | 17.5 | 13.9 | 19.1 | |
| | | Judgement | | AA | A | A | A | |
| *1 "(S)" in the pressure indicates that a spacer was used. | | | | | | | | |

Table 7

| | | | | Comparative Example | | | | |
|---|---|---|---|---|---|---|---|---|
| | | | | 1 | 2 | 3 | 4 | 5 |
| | | | Density | | | | | |
| Epoxy | | Ep1 | 1.3 | 3.59 | 3.59 | 3.59 | 3.59 | 3.59 |
| | | Ep2 | 1.3 | | | | | |
| | | Ep3 | 1.3 | | | | | |
| Curing agent | | C1 | 1.3 | 2.23 | 2.23 | 2.23 | 2.23 | 2.23 |
| | | C2 | 1.3 | | | | | |
| | | C3 | 1.3 | | | | | |
| Curing accelerator | | CA | 1.3 | 0.04 | 0.04 | 0.04 | 0.04 | 0.04 |
| Subtotal | | | | 5.85 | 5.85 | 5.85 | 5.85 | 5.85 |
| Solvent | | MEK | - | 3.5 | 4.3 | 3.7 | 4.1 | 8.3 |
| | | Toluene | - | 8.1 | 10.1 | 8.7 | 9.5 | 19.3 |
| | | Cyclopentanone | - | | | | | |
| Subtotal | | | | 17.45 | 20.25 | 18.25 | 19.45 | 33.45 |
| Aluminum nitride particle | | F1 | 3.26 | | | | | |
| | | F2 | 3.26 | | | | | |
| | | F3 | 3.26 | | | | | |
| | | F4 | 3.26 | 33.79 | | | | |
| | | F5 | 3.26 | | 33.79 | | | |
| | | F6 | 3.26 | | | 33.79 | | |
| | | F7 | 3.26 | | | | 33.79 | |
| | | F8 | 3.26 | | | | | 33.79 |
| Dispersant | | D1 | 1.16 | | | | | |
| Additive | | D2 | 2.15 | 0.29 | 0.29 | 0.29 | 0.29 | 0.29 |
| | | D3 | 2.15 | | | | | |
| Total amount of solid matters | | | | 39.93 | 39.93 | 39.93 | 39.93 | 39.93 |
| AlN content (wt%) | | | | 84.6 | 84.6 | 84.6 | 84.6 | 84.6 |
| Content of inorganic material (vol%) | | | | 70 | 70 | 70 | 70 | 70 |
| Theoretical density (g/cm$^3$) | | | | 2.66 | 2.66 | 2.66 | 2.66 | 2.66 |
| Theoretical specific heat (kJ/kg•K) | | | | 0.852 | 0.852 | 0.852 | 0.852 | 0.852 |
| | | | | | | | | |
| | | Dm | ΔD0.5/Dm | | | | | |
| | F1 | 101 | 0.58 | 0 | 0 | 0 | 0 | 0 |
| | F2 | 85.8 | 0.54 | 0 | 0 | 0 | 0 | 0 |
| | F3 | 33.8 | 0.79 | 0 | 0 | 0 | 0 | 0 |
| | F4 | 32.2 | 1.75 | 100 | 0 | 0 | 0 | 0 |
| | F5 | 16.9 | 1.81 | 0 | 100 | 0 | 0 | 0 |

(continued)

| | | | | Comparative Example | | | | |
|---|---|---|---|---|---|---|---|---|
| | | | | 1 | 2 | 3 | 4 | 5 |
| Particle size distribution condition of aluminum nitride particle and evaluation (Dm: average particle diameter, ΔD0.5: half width) | F6 | 7.5 | 1.6 | 0 | 0 | 100 | 0 | 0 |
| | F7 | 6.1 | 0.92 | 0 | 0 | 0 | 100 | 0 |
| | F8 | 3.3 | 1.01 | 0 | 0 | 0 | 0 | 100 |
| | | | | | | | | |
| | Peak (A) | Intensity | | 0.594 | - | - | - | - |
| | | Particle diameter | | 32.2 | - | - | - | - |
| | Peak (B) | Intensity | | - | - | 0.67 | 0.836 | 0.972 |
| | Minimum value (C) | Intensity | | - | - | - | - | - |
| | | | | | | | | |
| | Evaluation 1 | | AB Ratio | - | - | - | - | - |
| | | | Judgement | - | - | - | - | - |
| | Evaluation 2 | | AC Ratio | - | - | - | - | - |
| | | | BC Ratio | - | - | - | | - |
| | | | Judgement | - | - | - | - | - |
| Conditions in production (thermal pressing) of B-stage sheet | | Temperature (°C) | 130 | 120 | 120 | 120 | 120 | |
| | | Pressure (MPa) | 15 | 15 | 15 | 15 | 15 | |
| | | Time (min) | 10 | 10 | 10 | 10 | 10 | |
| Conditions in production (thermal pressing) of C-stage sheet | | Temperature (°C) | 180 | 180 | 180 | - | - | |
| | | Pressure (MPa) | 15 | 15 | 15 | - | - | |
| | | Time (min) | 60 | 60 | 60 | - | - | |
| Density of C-stage sheet | Theoretical value | $g/cm^3$ | 2.66 | 2.66 | 2.66 | 2.66 | 2.66 | |
| | Measured value | $g/cm^3$ | 2.27 | 2.14 | 2.2 | - | - | |
| Porosity of C-stage sheet | | (%) | 14.8 | 19.5 | 17.2 | - | - | |
| | | Judgement | C | C | C | - | - | |
| Thermal conductivity ofC-stage sheet | Thickness direction | W/mK | 5.7 | 4 | 4.5 | - | - | |
| | Plane direction | W/mK | 5.1 | 3.4 | 4.8 | - | - | |
| Fluidity of B-stage sheet | | Modulus (MPa) | 253.6 | 151.7 | 156.1 | 191.4 | 433.4 | |
| | | Judgement | C | C | C | C | C | |

Table 8

| | | | | Comparative Example | | | | |
|---|---|---|---|---|---|---|---|---|
| | | | | 6 | 7 | 8 | 9 | 10 |
| | | | Density | | | | | |
| Epoxy | | Ep1 | 1.3 | 3.59 | 3.59 | 3.59 | 3.59 | 3.59 |
| | | Ep2 | 1.3 | | | | | |
| | | Ep3 | 1.3 | | | | | |
| Curing agent | | C1 | 1.3 | 2.23 | 2.23 | 2.23 | 2.23 | 2.23 |
| | | C2 | 1.3 | | | | | |
| | | C3 | 1.3 | | | | | |
| Curing accelerator | | CA | 1.3 | 0.04 | 0.04 | 0.04 | 0.04 | 0.04 |
| Subtotal | | | | 5.85 | 5.85 | 5.85 | 5.85 | 5.85 |
| Solvent | | MEK | - | 3.7 | 3.6 | 3.7 | 3.7 | 3.7 |
| | | Toluene | - | 8.7 | 8.4 | 8.7 | 8.7 | 8.7 |
| | | Cyclopentanone | - | | | | | |
| Subtotal | | | | 18.25 | 17.85 | 18.25 | 18.25 | 18.25 |
| Aluminum nitride particle | | F1 | 3.26 | 10.14 | | | | |
| | | F2 | 3.26 | | 10.14 | | | |
| | | F3 | 3.26 | | | | | |
| | | F4 | 3.26 | | | 20.27 | | |
| | | F5 | 3.26 | | | | 16.89 | 23.65 |
| | | F6 | 3.26 | 23.65 | | | | |
| | | F7 | 3.26 | | 23.65 | 13.52 | 16.89 | |
| | | F8 | 3.26 | | | | | 10.14 |
| Dispersant | | D1 | 1.16 | | | | | |
| Additive | | D2 | 2.15 | 0.29 | 0.29 | 0.29 | 0.29 | 0.29 |
| | | D3 | 2.15 | | | | | |
| Total amount of solid matters | | | | 39.93 | 39.93 | 39.93 | 39.93 | 39.93 |
| AlN content (wt%) | | | | 84.6 | 84.6 | 84.6 | 84.6 | 84.6 |
| Content of inorganic material (vol%) | | | | 70 | 70 | 70 | 70 | 70 |
| Theoretical density (g/cm$^3$) | | | | 2.66 | 2.66 | 2.66 | 2.66 | 2.66 |
| Theoretical specific heat (kJ/kg•K) | | | | 0.852 | 0.852 | 0.852 | 0.852 | 0.852 |
| | | Dm | ΔD0.5/Dm | | | | | |
| | F1 | 101 | 0.58 | 30 | 0 | 0 | 0 | 0 |
| | F2 | 85.8 | 0.54 | 0 | 30 | 0 | 0 | 0 |
| | F3 | 33.8 | 0.79 | 0 | 0 | 0 | 0 | 0 |
| | F4 | 32.2 | 1.75 | 0 | 0 | 60 | 0 | 0 |
| | F5 | 16.9 | 1.81 | 0 | 0 | 0 | 50 | 70 |
| | F6 | 7.5 | 1.6 | 70 | 0 | 0 | 0 | 0 |
| | F7 | 6.1 | 0.92 | 0 | 70 | 40 | 50 | 0 |

(continued)

| | | | | Comparative Example | | | | |
|---|---|---|---|---|---|---|---|---|
| | | | | 6 | 7 | 8 | 9 | 10 |
| Particle size distribution condition of aluminum nitride particle and evaluation (Dm: average particle diameter, ∆D0.5: half-width) | F8 | 3.3 | 1.01 | 0 | 0 | 0 | 0 | 30 |
| | | | | | | | | |
| | Peak (A) | | Intensity | 0.348 | 0.384 | 0.435 | 0.388 | - |
| | | | Particle diameter | 101 | 85.8 | 35.5 | 20.4 | - |
| | Peak (B) | | Intensity | 0.47 | 0.588 | 0.407 | 0.599 | 0.359 |
| | Minimum value (C) | | Intensity | 0.034 | 0.024 | 0.256 | 0.225 | - |
| | | | | | | | | |
| | Evaluation 1 | | AB Ratio | 0.74 | 0.65 | 1.07 | 0.65 | - |
| | | | Judgement | C | C | C | C | C |
| | Evaluation 2 | | AC Ratio | 10.09 | 15.69 | 1.7 | 1.72 | - |
| | | | BC Ratio | 13.64 | 24.07 | 1.59 | 2.66 | - |
| | | | Judgment | AB | AB | C | C | - |
| Conditions in production (thermal pressing) of B-stage sheet | | | Temperature (°C) | 120 | 120 | 130 | 90 | 120 |
| | | | Pressure (MPa) | 15 | 15 | 15 | 15 | 15 |
| | | | Time (min) | 10 | 10 | 10 | 10 | 10 |
| Conditions in production (thermal pressing) of C-stage sheet | | | Temperature (°C) | - | - | 180 | 180 | 180 |
| | | | Pressure (MPa) | - | - | 15 | 15 | 15 |
| | | | Time (min) | - | - | 60 | 10 | 60 |
| Density of C-stage sheet | | Theoretical value | $g/cm^3$ | 2.66 | 2.66 | 2.66 | 2.66 | 2.66 |
| | | Measured value | $g/cm^3$ | - | - | 2.5 | 2.41 | 2.53 |
| Porosity of C-stage sheet | | | (%) | - | - | 6.1 | 9.5 | 4.8 |
| | | | Judgment | - | - | C | C | C |
| Thermal conductivity of C-stage sheet | | Thickness direction | W/mK | - | - | 5.4 | 4 | 6.4 |
| | | Plane direction | W/mK | - | - | 6 | 4.2 | 7.4 |
| Fluidity of B-stage sheet | | | Modulus (MPa) | 159.5 | 120 | 151.2 | 143.5 | 257.3 |
| | | | Judgement | C | C | C | C | C |

It is seen also from the results above that according to the present invention, a polymer composition with low probability for mixing of an air bubble in a thermal conductive molded article, despite a high volume filling of aluminum nitride particle, can be obtained.

While the invention has been described in detail and with reference to specific embodiments thereof, it will be

apparent to one skilled in the art that various changes and modifications can be made therein without departing from the spirit and scope of the invention.

This application is based on Japanese Patent Application (Patent Application No. 2014-046119) filed on March 10, 2014, the entirety of which is incorporated herein by way of reference.

## Claims

1. A thermal conductive polymer composition comprising an aluminum nitride particle and a polymer, wherein the aluminum nitride particle contains, as an essential component, a first particle having a maximum peak value of a particle size distribution curve in a range of 20 μm to 200 μm and contains, as an optional component, a second particle having a maximum peak value of the particle size distribution curve in a range of 0.1 μm to 10 μm, the first particle is contained in an amount of from 40 to 100 mass%, and the second particle is contained in an amount of 60 mass% or less, and in the first particle, when a particle diameter at the maximum peak value is denoted as $D_m$ (μm) and a half-width of the particle size distribution curve at the maximum peak value is denoted as $\Delta D_{0.5}$ (μm), a ratio $D_{is}$ ($\Delta D_{0.5}/D_m$) of the half-width to the particle diameter at the maximum peak value is 1.7 or less.

2. The thermal conductive polymer composition according to claim 1, wherein, in the aluminum nitride particle, the first particle as an essential component has the maximum peak value in a range of 30 μm to 150 μm, the first particle is contained in an amount of from 60 to 100 mass%, the second particle as an optional component has the maximum peak value in a range of 1 μm to 10 μm, the second particle is contained in an amount of 40 mass% or less, and the ratio $D_{is}$ is 1.4 or less.

3. The thermal conductive polymer composition according to claim 2, wherein the ratio $D_{is}$ is 1.2 or less.

4. The thermal conductive polymer composition according to any one of claims 1 to 3, wherein an epoxy resin is contained as the polymer.

5. A thermal conductive molded article obtained by molding the thermal conductive polymer composition according to any one of claims 1 to 4.

6. The thermal conductive molded article according to claim 5, which is a polymer sheet obtained by molding the thermal conductive polymer composition into a sheet shape.

*Fig. 1*

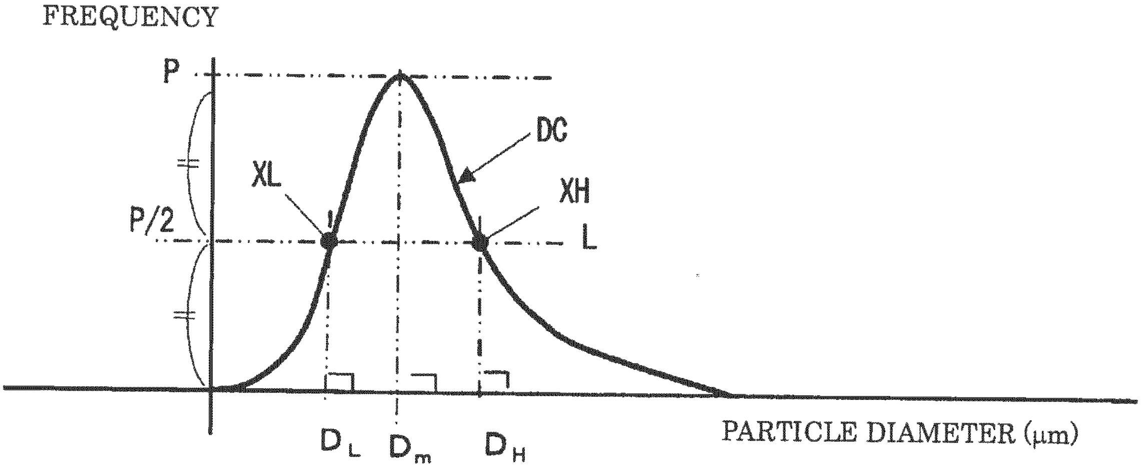
FREQUENCY
P
P/2
XL
DC
XH
L
D L
D m
D H
PARTICLE DIAMETER (μm)

*Fig. 2*

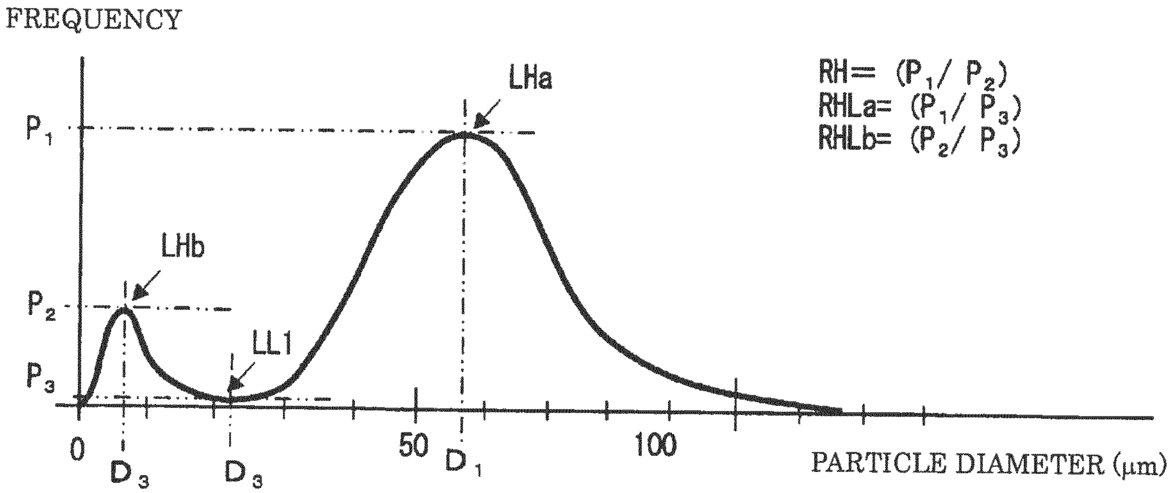
FREQUENCY
LHa
RH= (P1/ P2)
RHLa= (P1/ P3)
RHLb= (P2/ P3)
P1
LHb
P2
LL1
P3
0
D3
D3
50
D1
100
PARTICLE DIAMETER (μm)

*Fig. 3(A)*

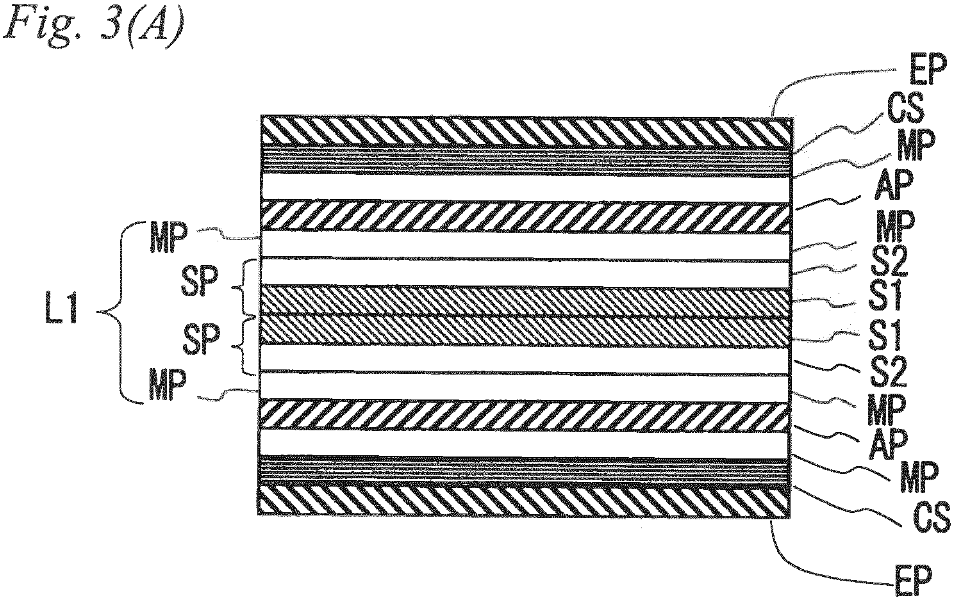
EP
CS
MP
AP
MP
S2
S1
S1
S2
MP
AP
MP
CS
EP
L1
MP
SP
SP
MP

*Fig. 3(B)*

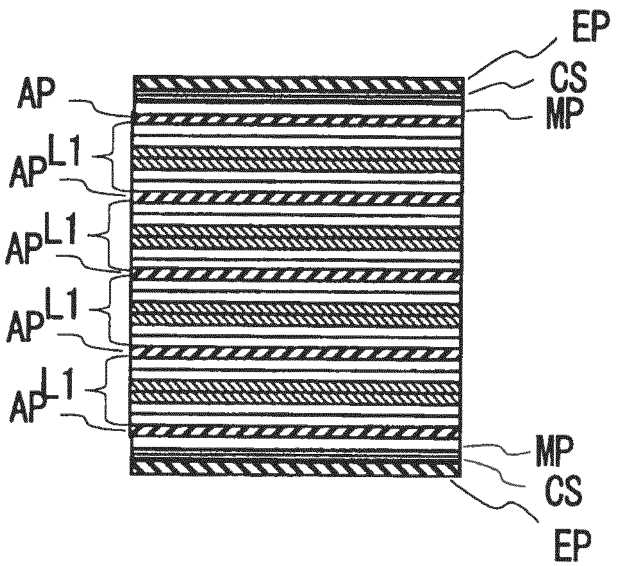
EP
CS
MP
AP
L1
AP
L1
AP
L1
AP
L1
AP
MP
CS
EP

## INTERNATIONAL SEARCH REPORT

International application No.
PCT/JP2014/083293

A. CLASSIFICATION OF SUBJECT MATTER
*C08L101/00*(2006.01)i, *C08K3/28*(2006.01)i

According to International Patent Classification (IPC) or to both national classification and IPC

B. FIELDS SEARCHED

Minimum documentation searched (classification system followed by classification symbols)
C08L101/00, C08K3/28

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2013/065758 A1 (Hitachi Chemical Co., Ltd.), 10 May 2013 (10.05.2013), claims; example 3 & JP 2013-234313 A & WO 2013/065159 A & WO 2013/065759 A & CN 104024332 A & KR 10-2014-0087015 A & TW 201333064 A & TW 201333089 A & CN 103906785 A & CN 103917605 A & KR 10-2014-0087012 A & KR 10-2014-0099870 A | 1-6 |
| X | JP 2012-211225 A (Hitachi Chemical Co., Ltd.), 01 November 2012 (01.11.2012), claims; paragraph [0008]; example 2 (Family: none) | 1-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 March 2015 (12.03.15) | 24 March 2015 (24.03.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

International application No. PCT/JP2014/083293

C (Continuation). DOCUMENTS CONSIDERED TO BE RELEVANT

| Category* | Citation of document, with indication, where appropriate, of the relevant passages | Relevant to claim No. |
|---|---|---|
| X | WO 2013/145961 A1 (Showa Denko Kabushiki Kaisha), 03 October 2013 (03.10.2013), claims; examples & KR 10-2014-0111302 A & CN 104220533 A & TW 201348424 A | 1-6 |
| X | JP 2011-256295 A (Shin-Kobe Electric Machinery Co., Ltd.), 22 December 2011 (22.12.2011), claims; example 1 (Family: none) | 1,3-6 |
| X | JP 2013-234313 A (Hitachi Chemical Co., Ltd.), 21 November 2013 (21.11.2013), claims; example 5 & WO 2013/065159 A & WO 2013/065758 A & WO 2013/065759 A & WO 2013/065159 A1 & TW 201333064 A & TW 201333089 A & CN 103906785 A & CN 103917605 A & CN 104024332 A & KR 10-2014-0087012 A & KR 10-2014-0087015 A & KR 10-2014-0099870 A | 1,3-6 |
| E,X | JP 2015-13927 A (ADEKA Corp.), 22 January 2015 (22.01.2015), claims; examples (Family: none) | 1-3,5,6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6024715 A
- JP 2014046119 A